(19) Europäisches Patentamt

European Patent Office

Office européen des brevets

(11) Veröffentlichungsnummer: **0 247 405**
**A1**

(12) # EUROPÄISCHE PATENTANMELDUNG

(21) Anmeldenummer: **87106632.0**

(22) Anmeldetag: **07.05.87**

(51) Int. Cl.⁴: **G 03 B 17/32**

(30) Priorität: **30.05.86 CH 2194/86**
**03.09.86 CH 3559/86**

(43) Veröffentlichungstag der Anmeldung: **02.12.87**
**Patentblatt 87/49**

(84) Benannte Vertragsstaaten: **CH DE FR GB IT LI**

(71) Anmelder: **Sinar AG Schaffhausen, CH-8245 Feuerthalen (CH)**

(72) Erfinder: **Koch, Carl, Im Santenbühl, CH-8211 Stetten (CH)**

(74) Vertreter: **Scheidegger, Zwicky, Werner & Co., Stampfenbachstrasse 48 Postfach, CH-8023 Zürich (CH)**

(54) **Photographische Kassette zum Handhaben und Belichten eines lichtempfindlichen Blattes.**

(57) Bei dieser Kassette (30) ist die Gehäuseöffnung (32) für den Lichtdurchtritt beim Belichten eines in die Kassette geladenen Filmblattes auch für den Ein- und Austritt des Filmblattes beim Laden und Entladen der Kassette bestimmt. Zum Übergreifen von Randpartien des in die Kassette eingebrachten Filmblattes sind bewegliche Rückhalteorgane (56, 57) vorhanden, die in unwirksame Lagen außerhalb der Konturen der Gehäuseöffnung (32) bewegbar sind, um den Ein- und Austritt des Filmblattes in zu seiner Ebene senkrechter Richtung zu ermöglichen. Wenn die Rückhalteorgane (56, 57) in ihre wirksamen Lagen bewegt sind, drückt eine unter Federeinfluß stehende Andrückplatte (52) das in die Kassette geladene Filmblatt an die Rückhalteorgane (56, 57) an, wodurch das Filmblatt plan gehalten wird. Von außen zugängliche Betätigungsorgane (81) in Gestalt von Stößeln stehen sowohl mit der Andrückplatte (52) als auch mit den Rückhalteorganen (56, 57) in Wirkungsverbindung, derart daß jeweils beim Bewegen der Betätigungsorgane (81) von einer inaktiven in eine aktive Lage die Andrückplatte (52) von den Rückhalteorganen (56, 57) weggedrängt und die letzteren in ihre unwirksamen Lagen bewegt werden, und umgekehrt.

0247405

Photographische Kassette zum Handhaben und Belichten
eines lichtempfindlichen Blattes

Die vorliegende Erfindung betrifft eine photographische
Kassette zum Handhaben und Belichten eines lichtempfindlichen
Blattes, insbesondere zur Verwendung an einer Grossformatkamera.

Kassetten dieser Art sind seit langem bekannt. Sie weisen
ein flaches Gehäuse zum Einlegen eines lichtempfindlichen
Blattes und einen am Gehäuse beweglich angeordneten Lichtschutzschieber auf, der zum Freigeben oder lichtdichten Verschliessen einer Gehäuseöffnung dient, die bezüglich Form und
Grösse dem lichtempfindlichen Blatt angepasst ist und den
Lichtdurchtritt beim Belichten des Blattes gestattet, wenn
der Lichtschutzschieber in Offenlage bewegt ist. Im Gehäuse
ist eine Stützfläche zum Abstützen der von der lichtempfindlichen Schicht abgewandten Rückseite des in das Gehäuse eingelegten Blattes angeordnet, und ferner sind Rückhalteorgane
zum Uebergreifen von Randpartien der lichtempfindlichen Vorderseite des in das Gehäuse eingelegten Blattes vorhanden,
welche Rückhalteorgane das lichtempfindliche Blatt in möglichst planer Anlage an der Stützfläche zu halten haben.

Bei Kassetten mit einem Kunststoff-Gehäuse, z.B. gemäss der
Norm USAS PH3.26-1951, sind die Rückhalteorgane durch Rippen
des Gehäuses gebildet und somit unbeweglich.Deshalb kann ein
lichtempfindliches Blatt nicht durch die für die Belichtung
des Blattes vorgesehene Gehäuseöffnung hindurch in einer
Richtung rechtwinklig zur Ebene des Blattes in das Gehäuse
eingelegt oder dem Gehäuse entnommen werden. Es ist vielmehr nötig, das lichtempfindliche Blatt durch eine schlitzförmige Oeffnung hindurch in einer mit der Ebene des Blattes zusammenfallenden Richtung einzuschieben oder herauszunehmen. Das manuelle Laden und Entladen einer solchen Kassette ist daher verhältnismässig mühsam und muss in einer Dunkelkammer durchgeführt werden.

Es sind auch sogenannte Blechkassetten bekannt, die ursprünglich zum Einlegen von Glasplatten mit einer lichtempfindlichen Schicht bestimmt waren. Unter diesen Blechkassetten gibt es solche, bei denen zumindest ein Teil der Rückhalteorgane beweglich ausgebildet und zum Laden und Entladen der Kassette aus ihren wirksamen Lagen in unwirksame Lagen bringbar sind, so dass ein photographisches Blatt oder eine photographische Glasplatte im wesentlichen in einer zur Ebene des Blattes oder der Glasplatte senkrechten Richtung durch die für den Lichtdurchtritt beim Belichten bestimmte Gehäuseöffnung hindurch in die Kassette eingelegt oder aus derselben herausgenommen werden kann, wenn der Lichtschutzschieber in seine Offenlage bewegt ist. Bei einer bekannten Ausführungsart dieser Kassetten sind die Rückhalteorgane an zwei in bezug aufeinander verschiebbaren Teilen des Gehäusebodens fest angeordnet, während bei einer anderen bekannten Ausführungsform die beweglichen Rückhalteorgane mittels eines im Gehäuseboden drehbar gelagerten und von aussen betätigbaren Doppelexzenters bewegbar sind. Blechkassetten der beschriebenen Art sind zur Verwendung an modernen Grossformat-Fachkameras nicht brauchbar und zum Laden mit flexiblen lichtempfindlichen Filmblättern anstelle von starren Glasplatten nur bedingt geeignet. Ausserdem verlangen sie beim Laden und Entladen eine zeitraubende, aufmerksame Handhabung hinsichtlich der zu koordinierenden Bewegungen des Lichtschutzschiebers und der beweglichen Rückhalteorgane, weshalb Fehlbedienungen und damit verbundene Beschädigungen von photographischem Material, insbesondere durch Fingerabdrücke, nicht ausgeschlossen sind.

Bei den geschilderten bekannten Kassetten ist zwischen der Stützfläche für die Rückseite eines lichtempfindlichen Blattes einerseits und den zum Uebergreifen von Randpartien der lichtempfindlichen Schicht des Blattes dienenden Rückhalteorganen anderseits ein unveränderlicher Abstand zur Bildung eines Zwischenraumes vorhanden, in welchem die Randpartien des Blattes Platz finden. Da die zur Verwendung gelangenden lichtempfindlichen Blätter unterschiedliche Dicken aufweisen können und weil ausserdem genügend Spiel für das Einschieben der lichtempfindlichen Blätter oder das für das Darüberschieben der beweglichen Rückhalteorgane vorhanden sein muss, hat der erwähnte Abstand verhältnismässig gross zu sein. So beträgt er z.B. nach der oben zitierten Norm USAS PH3.26-1951 mindestens 0,012 Zoll = 0,3 mm. Dies bedeutet, dass die heute üblicherweise verwendeten flexiblen Filmblätter mit einer Dicke im Toleranzbereich von 0,19 bis 0,24 mm nicht in jedem Fall exakt plan in der Kassette liegen, wodurch die Schärfe der photographischen Abbildung beeinträchtigt werden kann.

Die hauptsächliche Aufgabe der vorliegenden Erfindung ist es, eine insbesondere zur Verwendung an modernen Grossformat-Fachkameras geeignete photographische Kassette derart auszubilden, dass sie wie die vorstehend erwähnten Blechkassetten bei geöffnetem Lichtschutzschieber durch die für den Lichtdurchtritt beim Belichten vorgesehene Gehäuseöffnung hindurch mit einem lichtempfindlichen Blatt geladen und entladen werden kann und daher auch zum Laden und Entladen mit Hilfe von automatischen oder halbautomatischen Lade- und Entladegeräten geeignet ist, und dass weiter das jeweils in die Kassette geladene lichtempfindliche Blatt in praktisch vollkommener Planlage gehalten ist und dabei die lichtempfindliche Fläche des Blattes genau in einer durch die Rückhalteorgane festgelegten Ebene liegt. Im übrigen soll die Kassette gemäss der Erfindung derart ausgebildet sein, dass Fehlmanipulationen des Photographen oder seiner Hilfspersonen weitgehend ausgeschaltet sind.

Die Erfindung geht aus von einer zum Stand der Technik gehörenden Kassette mit einem flachen Gehäuse zum Einlegen eines lichtempfindlichen Blattes, mit einem am Gehäuse beweglich angeordneten Lichtschutzschieber zum Freigeben oder lichtdichten Verschliessen einer Gehäuseöffnung, die bezüglich Form und Grösse der lichtempfindlichen Fläche des Blattes angepasst ist und sowohl den Lichtdurchtritt beim Belichten des Blattes als auch den Durchtritt des Blattes beim Laden und Entladen der Kassette gestattet, mit einer im Gehäuse angeordneten Stützfläche zum Abstützen der von der lichtempfindlichen Schicht abgewandten Rückseite des in das Gehäuse eingelegten Blattes und mit ebenfalls im Gehäuse angeordneten Rückhalteorganen zum Uebergreifen von Randpartien der lichtempfindlichen Vorderseite des in das Gehäuse eingelegten Blattes, welche Rückhalteorgane mindestens zum Teil beweglich ausgebildet und zum Laden und Entladen der Kassette aus ihren wirksamen Lagen in unwirksame Lagen ausserhalb des vom lichtempfindlichen Blatt benötigten Bewegungsweges bringbar sind, und mit mindestens einem am Gehäuse der Kassette von aussen zugänglichen Betätigungsorgan, das mit den Rückhalteorganen in Wirkungsverbindung steht und zwischen einer inaktiven Lage, bei welcher die Rückhalteorgane sich in ihren wirksamen Lagen befinden, und einer aktiven Lage, bei welcher die Rückhalte in ihre unwirksamen Lagen gebracht sind, bewegbar ist.

Erfindungsgemäss ist bei einer Kassette dieser Art die Stützfläche zum Abstützen der Rückseite des jeweils in das Gehäuse eingelegten lichtempfindlichen Blattes an einer Andrückplatte vorhanden, die unter dem Einfluss mindestens einer zugeordneten Andrückfeder steht, die bestrebt ist, die Andrückplatte in Richtung gegen die Gehäuseöffnung zu bewegen, um ein in das Gehäuse eingelegtes Blatt zwischen der Stützfläche der Andrückplatte einerseits und den in ihre wirksamen Lagen gebrachten Rückhalteorganen anderseits festzuklemmen, und weiter ist bei dieser erfindungsgemässen Kassette das zum Bewegen der Rückhalteorgane vorgesehene Betätigungsorgan zusätzlich mit einem mit der Andrückplatte
zusammenarbeitenden Steuerteil verbunden, derart dass jede
Bewegung des Betätigungsorgans in seine aktive Lage auch
ein Zurückdrängen der Andrückplatte entgegen dem Einfluss
der Andrückfeder zur Folge hat, um zwischen der Stützfläche
der Andrückplatte und den Rückhalteorganen einen freien
Abstand zu schaffen. Durch das Zurückdrängen der Andrückplatte werden die Rückhalteorgane vom Einfluss der Andrückfeder entlastet, so dass die Rückhalteorgane mit geringem
Kraftaufwand in ihre unwirksamen bzw. wirksamen Lagen bewegbar sind und bei ihren Bewegungen nicht auf den benachbarten Randpartien der lichtempfindlichen Fläche des zu ladenden oder zu entladenden Blattes reiben. Der beim Zurückdrängen der Andrückplatte jeweils entstehende freie Abstand
zwischen der Stützfläche der Andrückplatte einerseits und
den  Rückhalteorganen anderseits gewährleistet in hohem
Mass auch Sicherheit dafür, dass nach dem Einlegen eines
lichtempfindlichen Blattes in das Gehäuse der Kassette beim
Bewegen des Betätigungsorgans in seine inaktive Lage die
Rückhalteorgane einwandfrei über die benachbarten Randpartien des eingelegten Blattes in ihre wirksamen Lagen
laufen.

Die Erfindung betrifft auch eine Einrichtung zum Laden
oder Entladen der erfindungsgemässen Kassette. Diese
Einrichtung weist eine Haltevorrichtung zum Einsetzen
der Kassette auf und ist mit mindestens einem an der
Haltevorrichtung stationär angeordneten Tastorgan versehen, das derart angeordnet und ausgebildet ist, dass
es beim Einsetzen der Kassette in die Haltevorrichtung
automatisch mit dem Betätigungsorgan an der Kassette
in Eingriff gelangt, um das Betätigungsorgan in seine
aktive Lage zu bewegen und dabei die Andrückplatte entgegen dem Einfluss der Andrückfeder zurückzudrängen und
die beweglichen Rückhalteorgane in ihre unwirksamen Lagen zu bringen.

Diese Einrichtung und die erfindungsgemässe Kassette erlauben dem Photographen oder seinen Hilfspersonen das
Laden und Entladen der Kassette, ohne an die beweglichen
Rückhalteorgane denken zu müssen. Die Einrichtung kann
weiter derart ausgebildet sein, dass sie das Laden und
Entladen der Kassette bei vollem Umgebungslicht gestattet, ohne dass ein störender Lichteinfall auf das lichtempfindliche Material zu befürchten ist.

Weitere Merkmale und Einzelheiten der Erfindung ergeben
sich aus den Patentansprüchen, aus der nachfolgenden Beschreibung von Ausführungsbeispielen und aus den zugehörigen Zeichnungen, in denen die Erfindung rein beispielsweise veranschaulicht ist.

Es zeigen:

Fig. 1   eine erfindungsgemässe Kassette in Vorderansicht mit
         Blick auf die Gehäuseöffnung für den Durchtritt des
         in die Kassette zu ladenden lichtempfindlichen Blattes und für den Lichtdurchtritt beim Belichten des Blattes, bei teilweise weggebrochenem Lichtschutzschieber;

Fig. 2    eine Seitenansicht der Kassette von links in

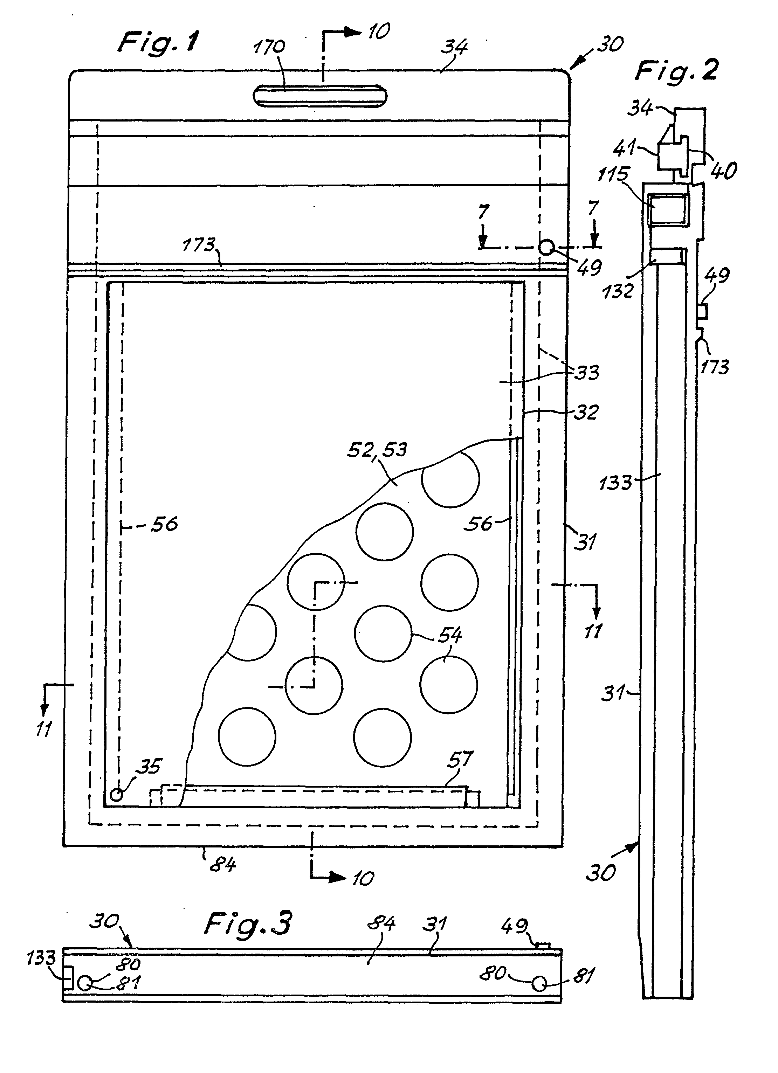

         Fig. 1 gesehen, in grösserem Massstab;

Fig. 3    eine Ansicht der Kassette mit Blick auf das in
         Fig. 1 untere Stirnende des Kassettengehäuses;

Fig. 4    eine Vorderansicht der mit einer Griffleiste versehenen Partie des Lichtschutzschiebers der Kassette;

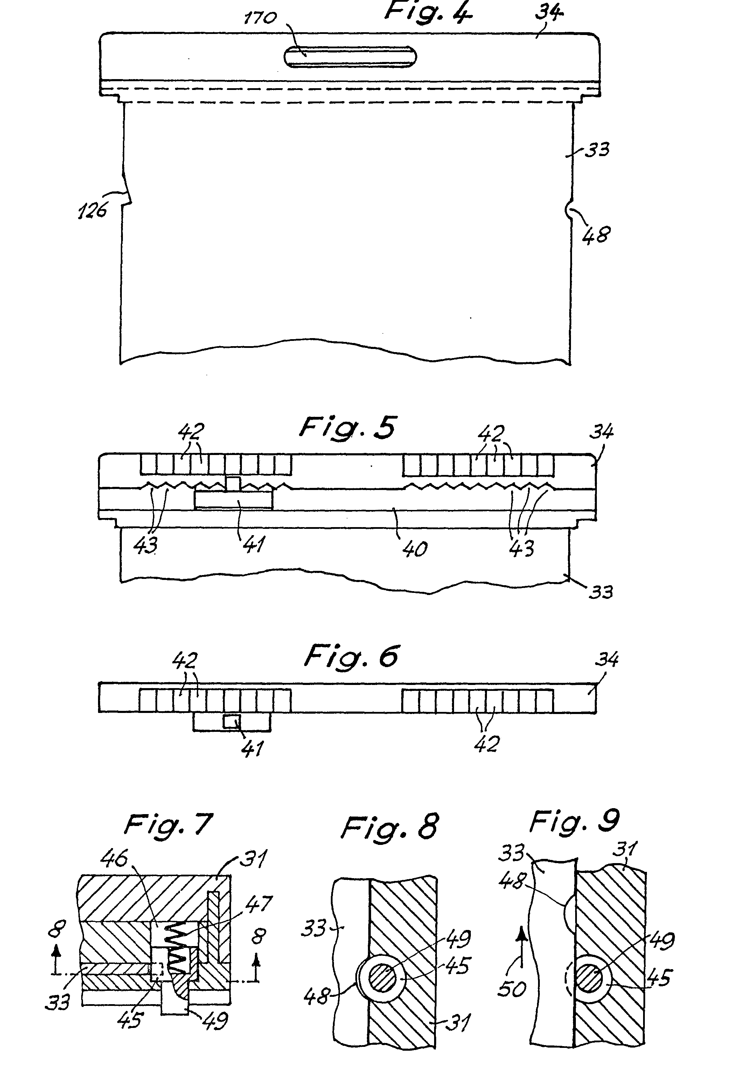

Fig. 5    die gleiche Partie des Lichtschutzschiebers von der
         Rückseite gesehen;

Fig. 6    eine Stirnansicht der Griffleiste des Lichtschutzschiebers von oben in Fig. 5 betrachtet;

Fig. 7    einen Teilquerschnitt nach der Linie 7-7 in Fig. 1,
         in grösserem Massstab, eine Sicherungseinrichtung
         zum Sperren des Lichtschutzschiebers in seiner
         Schliesslage zeigend;

Fig. 8    einen Schnitt nach der Linie 8-8 in Fig. 7;

Fig. 9    eine der Fig. 8 analoge Darstellung bei teilweise
         geöffnetem Lichtschutzschieber;

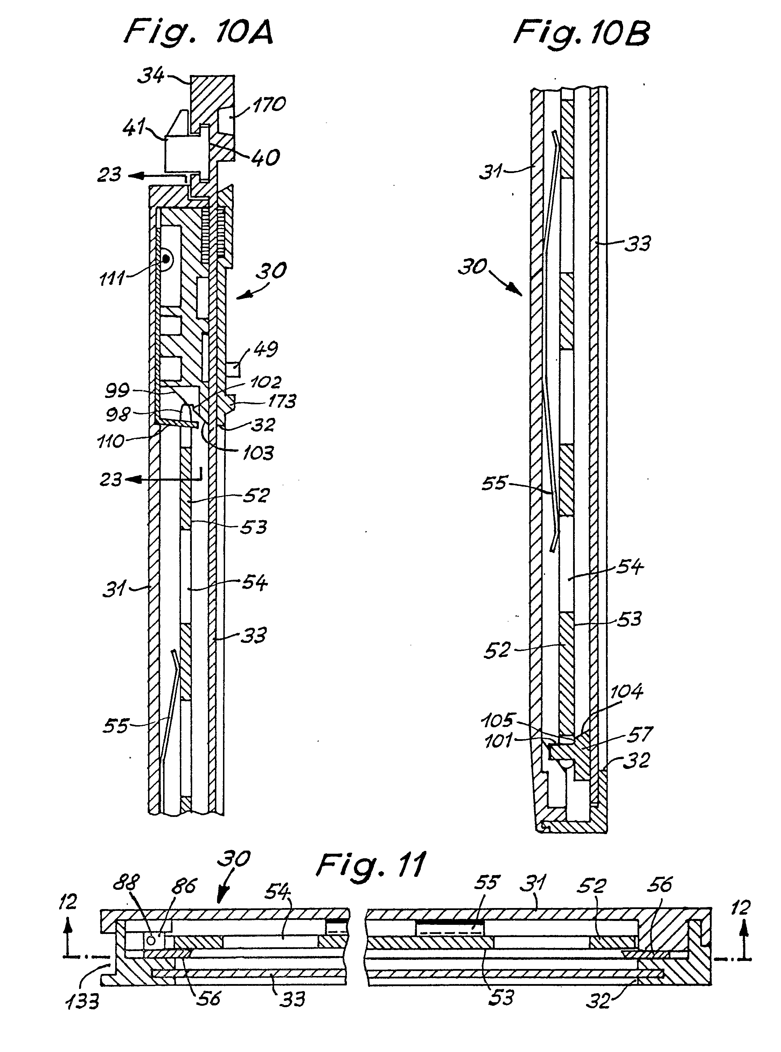

Fig. 10A und 10B je einen Teillängsschnitt nach der Linie
         10-10 in Fig. 1, in grösserem Massstab;

Fig. 11   die Kassette im Querschnitt nach der Linie 11-11
         in Fig. 1, in grösserem Massstab, wobei zwei in
         wirksame Lagen bewegte Rückhalteorgane für ein in

0247405

die Kassette eingelegtes (nicht gezeigtes) lichtempfindliches Blatt ersichtlich sind;

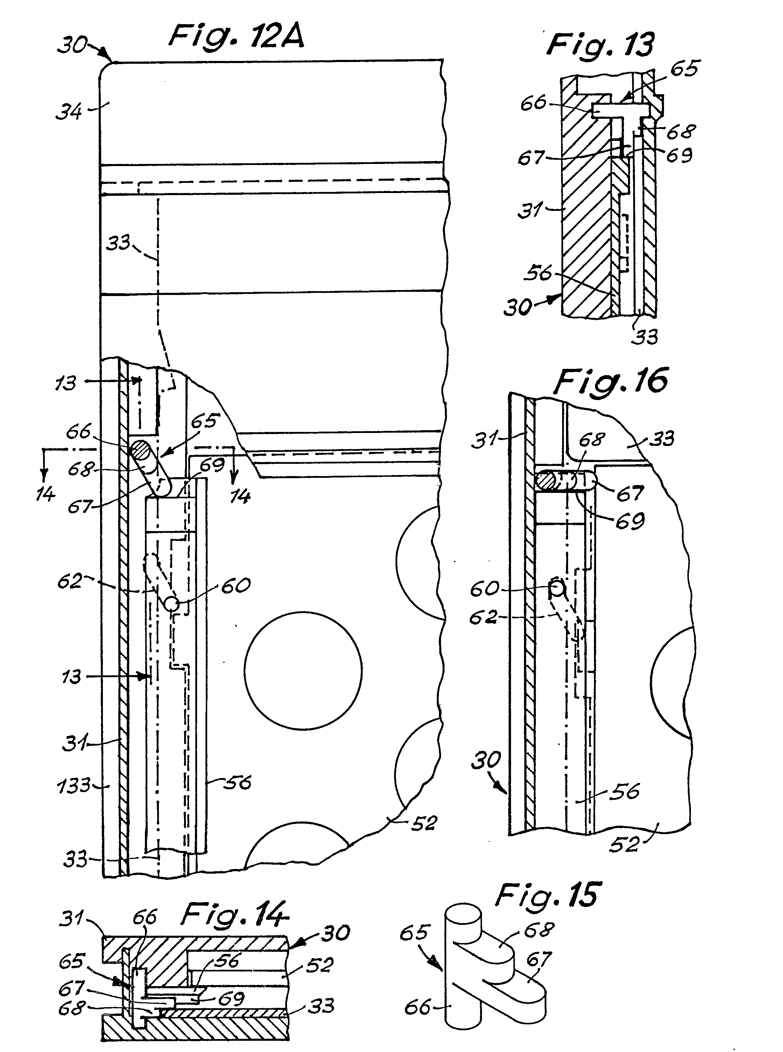

Fig. 12A und 12B je einen Teilschnitt nach der Linie 12-12

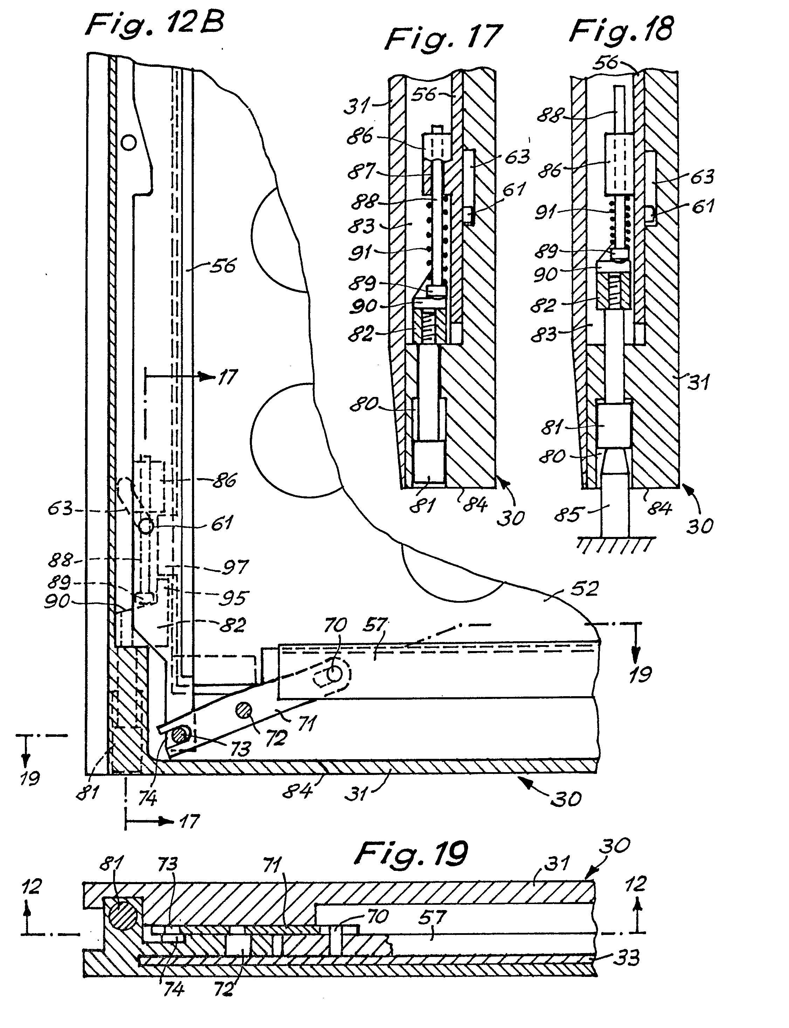

in Fig. 11 und 19, in grösserem Massstab, die beweglichen Rückhalteorgane der Kassette in ihren
wirksamen Lagen zeigend;

Fig. 13   einen Teillängsschnitt nach der Linie 13-13 in
Fig. 12A;

Fig. 14   einen Teilquerschnitt nach der Linie 14-14 in
Fig. 12A;

Fig. 15   eine perspektivische Darstellung eines in den Fig.
12A, 13 und 14 sichtbaren Schwenkgliedes;

Fig. 16   eine der Fig. 12A analoge Teildarstellung bei geöffnetem Lichtschutzschieber und in unwirksame
Lagen bewegten Rückhalteorganen;

Fig. 17   einen Teillängsschnitt nach der Linie 17-17 in
Fig. 12B;

Fig. 18   eine der Fig. 17 analoge Darstellung mit einem Tastfinger zum Betätigen eines Betätigungsorgans für
die beweglichen Rückhalteorgane;

Fig. 19   einen Teilquerschnitt nach der Linie 19-19 in
Fig. 12B;

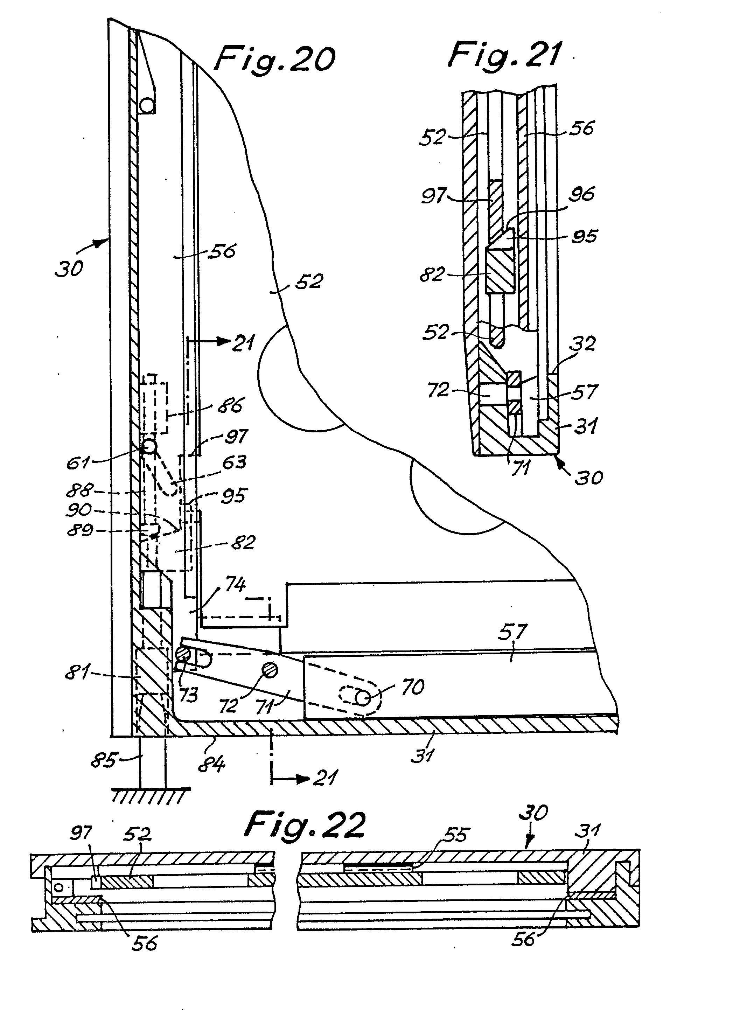

Fig. 20   eine der Fig. 12B analoge Darstellung bei geöffnetem
Lichtschutzschieber und in ihre unwirksamen Lagen
bewegten Rückhalteorganen;

Fig. 21    einen Teillängsschnitt nach der Linie 21-21 in
           Fig. 20;

Fig. 22    einen der Fig. 11 analogen Querschnitt bei geöffnetem Lichtschutzschieber und in ihre unwirksamen Lagen bewegten Rückhalteorganen;

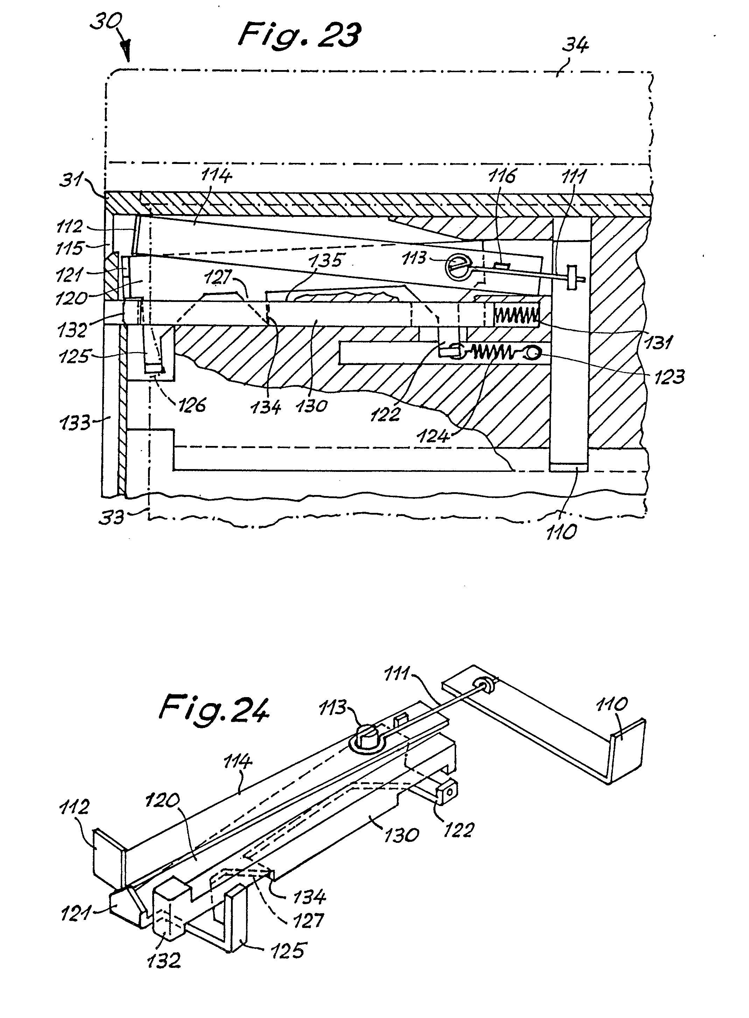

Fig. 23    einen Teilschnitt nach der Linie 23-23 in Fig. 10A,
           in grösserem Massstab, Anzeigevorrichtungen und einen Sperr-Riegel im Leerzustand der Kassette veranschaulichend, welche die Sicherheit gegen Fehlmanipulationen der Kassette erhöhen;

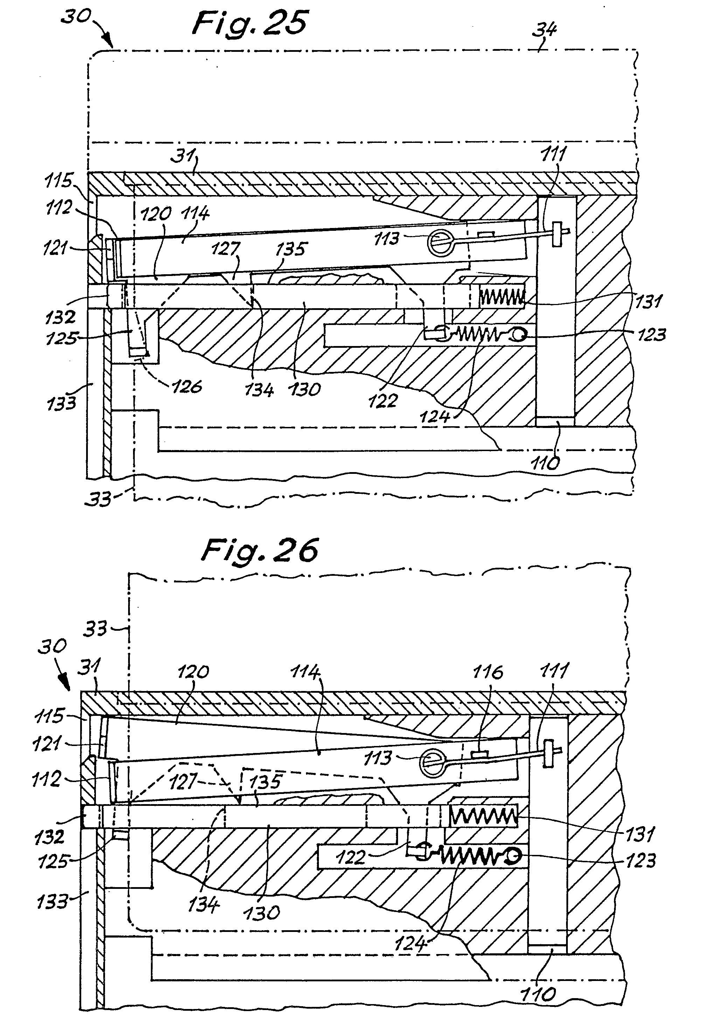

Fig. 24    eine perspektivische Darstellung der Anzeigevorrichtungen und des Sperr-Riegels nach Fig. 23;

Fig. 25    eine der Fig. 23 analoge Darstellung, welche die Anzeigevorrichtungen und den Sperr-Riegel bei geladener Kassette und geschlossenem Lichtschutzschieber
           zeigt;

Fig. 26    eine weitere der Fig. 23 analoge Darstellung, welche
           die Anzeigevorrichtungen und den Sperr-Riegel bei geladener Kassette und geöffnetem Lichtschutzschieber
           zeigt:

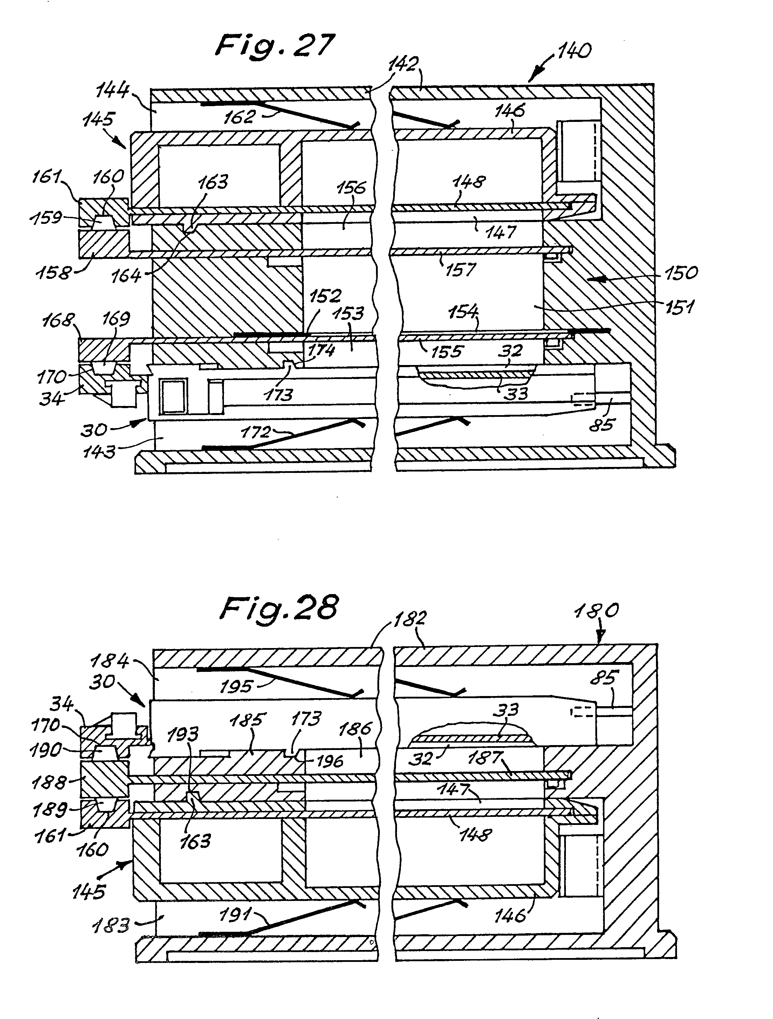

Fig. 27    einen senkrechten Schnitt durch eine Einrichtung zum
           halbautomatischen Laden der in den Fig. 1-26 gezeigten Kassette mit einem lichtempfindlichen Blatt
           bei vollem Umgebungslicht;

Fig. 28    einen senkrechten Schnitt durch eine Einrichtung zum
           Entladen der in den Fig. 1-26 gezeigten Kassette
           bei vollem Umgebungslicht;

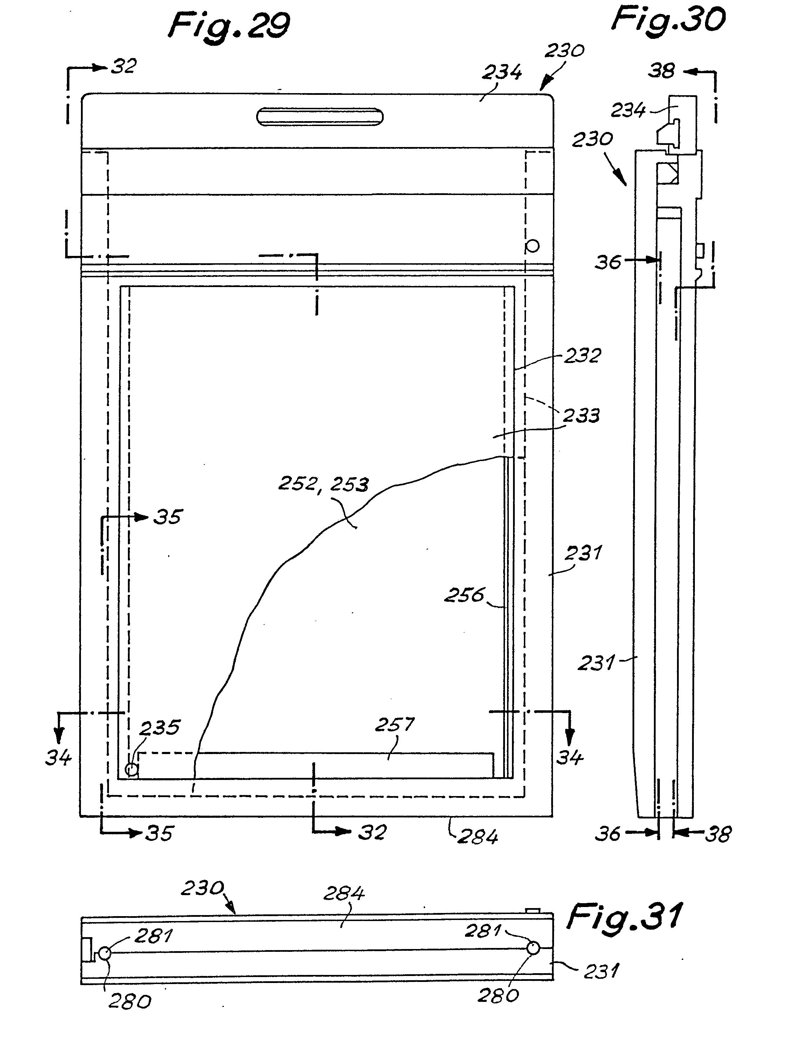

Fig. 29 ein zweites Ausführungsbeispiel der erfindungsgemässen Kassette in Vorderansicht mit Blick auf die Gehäuseöffnung für den Durchtritt eines in die Kassette zu ladenden lichtempfindlichen Blattes und für den
        Lichtdurchtritt beim Belichten des Blattes, bei teilweise weggebrochenem Lichtschutzschieber;

Fig. 30 eine Seitenansicht der gleichen Kassette von links
        in Fig. 29 gesehen;

Fig. 31 eine Ansicht der Kassette mit Blick auf das in Fig.29
        untere Stirnende des Kassettengehäuses;

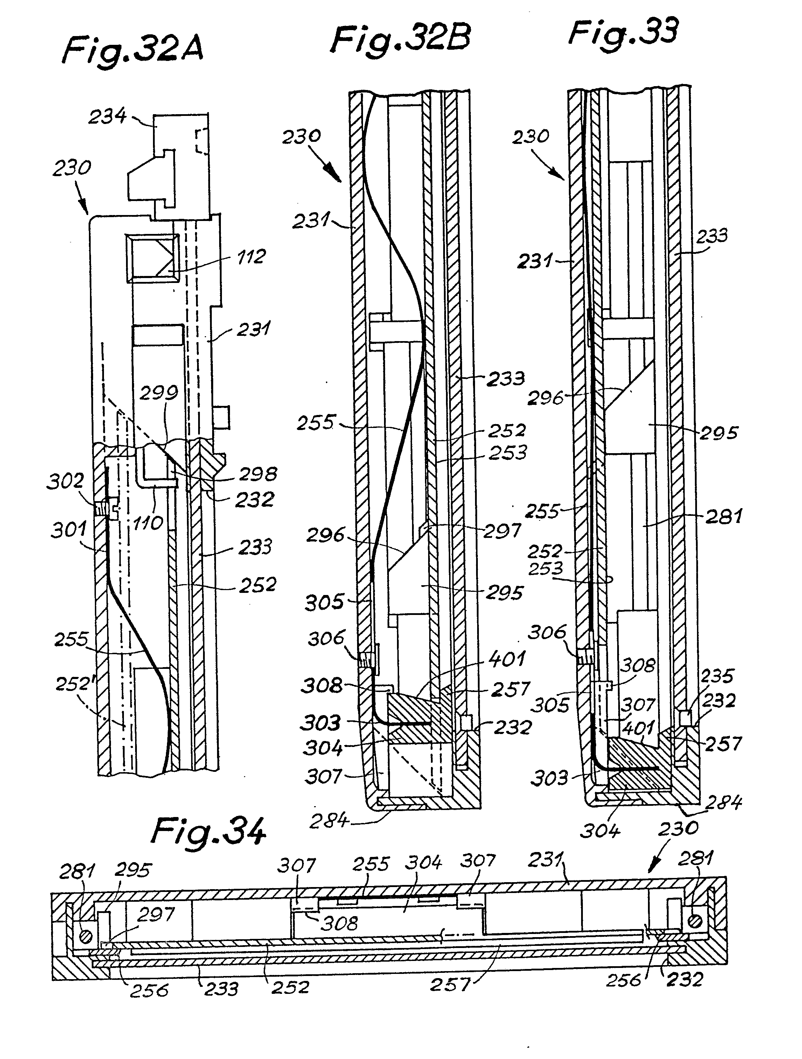

Fig. 32A und 32B je einen Teillängsschnitt nach der Linie
        32-32 in Fig. 29, in grösserem Massstab;

Fig. 33 eine der Fig. 32B analoge Schnittdarstellung bei von
        den Rückhalteorganen zurückgedrängter Andrückplatte
        und bei in ihre unwirksamen Lagen bewegten Rückhalteorganen;

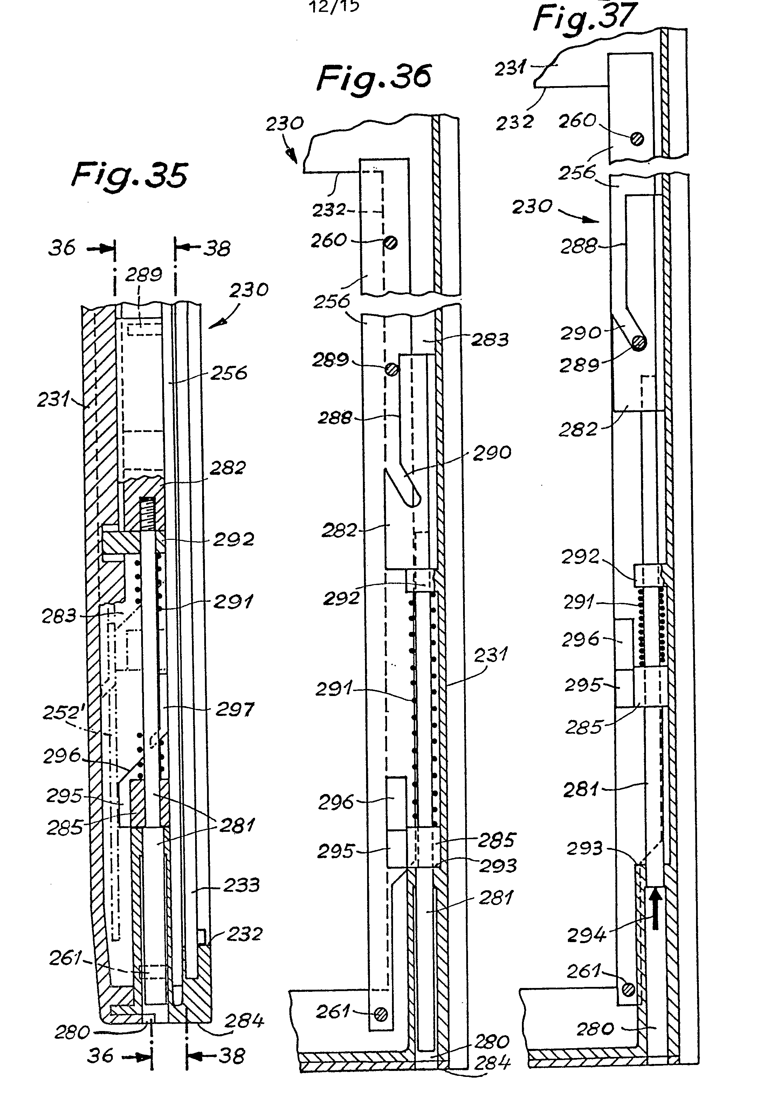

Fig. 34 einen Querschnitt nach der Linie 34-34 in Fig. 29,
        in grösserem Massstab;

Fig. 35 einen Teil der Kassette im Längsschnitt nach der
        Linie 35-35 in Fig. 29, in grösserem Massstab;

Fig. 36 einen Teil der Kassette im Schnitt nach der Linie
        36-36 in Fig. 29, in grösserem Massstab, sowie nach
        der Linie 36-36 in Fig. 35;

Fig. 37 eine der Fig. 36 analoge Darstellung, die eines der
        beweglichen Rückhalteorgane in seiner unwirksamen
        Lage zeigt ;

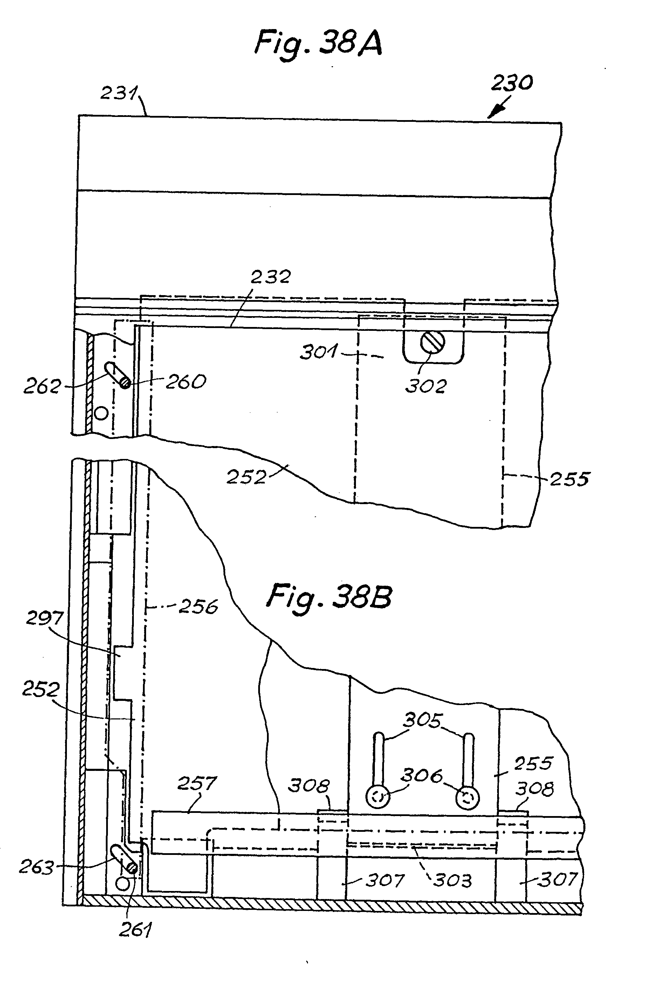

Fig. 38A und 38B je einen teilweisen Schnitt nach der Linie
        38-38 in Fig. 29, in grösserem Massstab, sowie nach
        der Linie 38-38 in Fig. 35, in kleinerem Massstab;

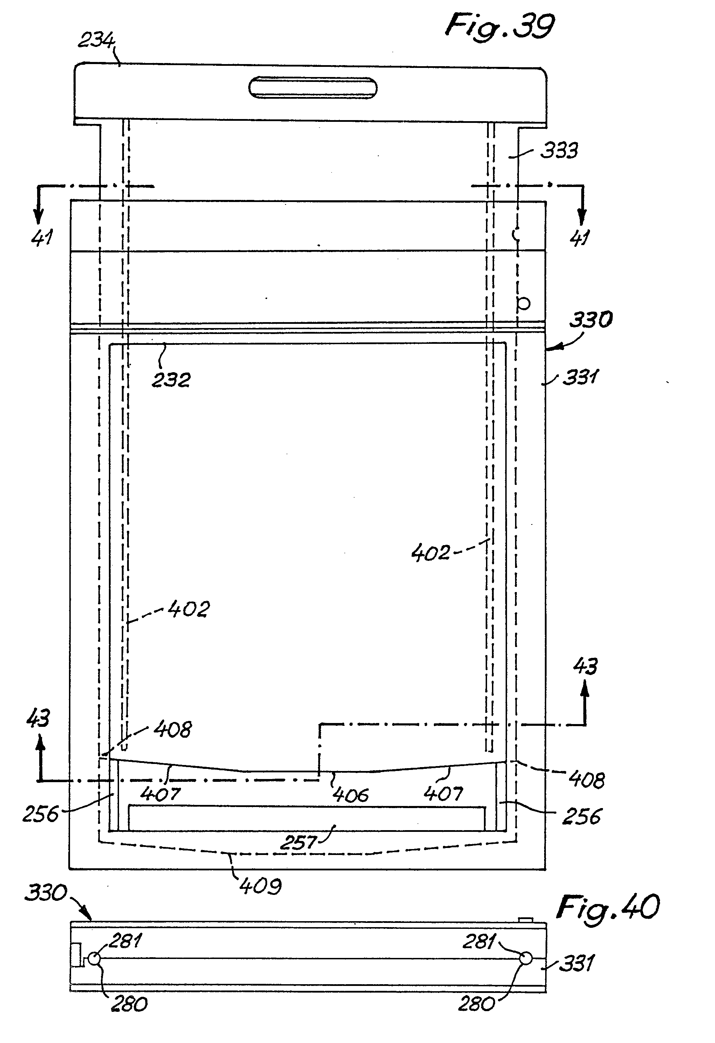

Fig. 39    ein drittes Ausführungsbeispiel der erfindungsgemässen Kassette, nämlich eine Weiterbildung
der Ausbildungsform nach den Fig. 29 bis 38,
in Vorderansicht mit Blick auf die Gehäuseöffnung bei wenig geöffnetem Lichtschutzschieber;

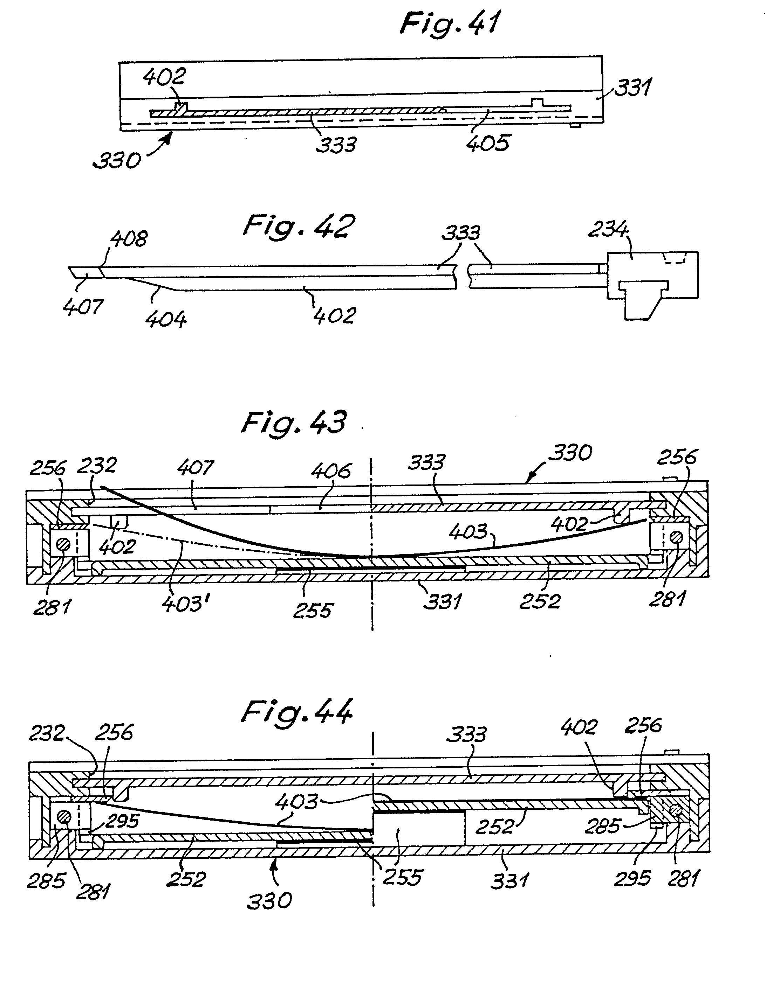

Fig. 40    eine Ansicht der gleichen Kassette mit Blick
auf das in Fig. 39 untere Ende des Kassettengehäuses;

Fig. 41    die gleiche Kassette im Schnitt nach der Linie
41-41 bei teilweise weggebrochenem Lichtschutzschieber;

Fig. 42    den Lichtschutzschieber der Kassette gemäss den
Fig. 39 bis 41 in einer Seitenansicht, in grösserem Massstab;

Fig. 43    einen Querschnitt nach der Linie 43-43 in Fig. 39,
in grösserem Massstab, während des Ladens der
Kassette mit einem lichtempfindlichen Blatt;
und

Fig. 44    eine der Fig. 43 analoge Querschnittsdarstellung
der Kassette in geladenem Zustand bei ganz geschlossenem Lichtschutzschieber, und zwar links
bei noch zurückgedrängter Andrückplatte und rechts
bei freigegebener Andrückplatte.

0247405

Die in den Fig.1 bis 26 dargestellte photographische Kassette
30 weist gemäss den Fig. 1 bis 3 ein flaches Gehäuse 31 mit
einer rechteckförmigen Gehäuseöffnung 32 auf, die bezüglich
Form und Grösse einem in das Gehäuse einlegbaren lichtempfindlichen Blatt, insbesondere Filmblatt, angepasst ist und den
Lichtdurchtritt beim Belichten des Blattes erlaubt. Der Gehäuseöffnung 32 ist ein im Gehäuse verschiebbar gelagerter
Lichtschutzschieber 33 zugeordnet, der wahlweise in eine die
Gehäuseöffnung 32 lichtdicht verschliessende Schliesslage
oder in eine diese Gehäuseöffnung gänzlich freigebende Offenlage bewegbar ist. Die äussere Gestalt und die Aussenabmessungen des Gehäuses erfüllen die gebräuchlichen international anerkannten Normen für photographische Filmkassetten zur Verwendung an Grossformat-Fachkameras. Der Lichtschutzschieber 33 ist mit einer Griffleiste 34 versehen, die
das Betätigen des Lichtschutzschiebers ermöglicht und sich
auch dann ausserhalb des Gehäuses 31 befindet, wenn der
Lichtschutzschieber in seine Schliesslage bewegt ist. An der
von der Griffleiste 34 abgewandten Endpartie des Lichtschutzschiebers 33 ist mindestens ein Anschlagzapfen 35 (Fig.
1) fest angeordnet, der mit einer (nicht dargestellten)
Anschlagfläche am Gehäuse 31 zusammenarbeitet, wenn der
Lichtschutzschieber in Offenlage ist, um ein gänzliches Abziehen des Lichtschutzschiebers vom Gehäuse zu verhindern.

Gemäss den Fig. 2, 5 und 6 verläuft entlang der Griffleiste
34 des Lichtschutzschiebers 33 eine Führungsnut 40 für einen
Markierungsläufer 41, der in Querrichtung des Lichtschutzschiebers verstellbar ist. Ferner ist die Griffleiste 34
mit einer Reihe von Emulsionsdatenfeldern 42 versehen, die
verschiedenen gebräuchlichen Emulsionstypen von lichtempfindlichen photographischen Blättern zugeordnet sind, welche
sich durch ihre Daten, wie z.B. Empfindlichkeit, schwarzweiss oder farbig, positiv oder negativ, Farbtemperatur usw.,

unterscheiden. Diese Emulsionsdatenfelder 42 sind auf nicht
dargestellte Weise gekennzeichnet, z.B. durch Zahlen, Farben
und/oder Codezeichen oder Pictrogramme. Der Markierungsläufer 41 lässt sich manuell in bezug auf ein beliebiges
der Emulsionsdatenfelder 42 ausrichten, um die betreffenden
Emulsionsdaten zu bezeichnen und damit dem Photographen
visuell anzuzeigen, welches photographische Blattmaterial
sich in der Kassette 30 befindet. Eine Flanke der Führungsnut 40 für den Markierungsläufer 41 weist Rastkerben 43 (Fig.
5) auf, die je einem der Emulsionsdatenfelder 42 gegenüberliegen, und der Markierungsläufer 41 ist mit einem (nicht
dargestellten) federnden Glied versehen, das zum Einrasten
in eine der Rastkerben 43 bestimmt ist, um den Markierungsläufer in der jeweils eingestellten Lage gegen unbeabsichtigtes Verschieben zu sichern.

Um ein unbeabsichtigtes Bewegen des Lichtschutzschiebers 33
in seine Offenlage zu verhüten, ist in bekannter Weise eine
Sicherungsvorrichtung zum Sperren des Lichtschutzschiebers
in seiner Schliesslage vorhanden. Diese Sicherungsvorrichtung
weist gemäss den Fig. 7 bis 9 ein kolbenartiges Verriegelungsorgan 45 auf, das in einer Bohrung 46 des Gehäuses 31 achsial
verschiebbar geführt ist und unter dem Einfluss einer ebenfalls in der Bohrung 46 angeordneten Feder 47 steht. Der
Lichtschutzschieber 33 ist gemäss den Fig. 4, 8 und 9 an einer Randpartie mit einer kreissegmentförmigen Kerbe 48 versehen, in welche das Verriegelungsorgan 45 unter dem Einfluss
der Feder 47 eingreift, wenn der Lichtschutzschieber sich in
seiner Schliesslage befindet. Hierdurch wird der Lichtschutzschieber 33 in seiner Schliesslage gesichert. An seinem von
der Feder 47 abgewandten Ende weist das Verriegelungsorgan
45 einen zapfenförmigen Fortsatz 49 (Fig. 1, 2 und 7 bis 9)
mit kleinerem Durchmesser auf. Dieser Fortsatz 49 befindet
sich ausserhalb des Bewegungsweges des Lichtschutzschiebers
33 und behindert somit die Bewegungen desselben in keiner Weise. Wie in den Fig. 2 und 7 ersichtlich ist, ragt der Fortsatz 49 an der die Gehäuseöffnung 32 aufweisenden Vorderseite des Gehäuses 31 nach aussen, so dass er zugänglich ist. Durch einen Druck auf den Fortsatz 49 ist das Verriegelungsorgan 45 entgegen dem Einfluss der Feder 47 ausser Verriegelungseingriff mit der Kerbe 48 des Lichtschutzschiebers 33 bringbar, damit letzterer in seine Offenlage bewegt werden kann. Fig. 9 zeigt die Situation kurz nach dem Beginn der Oeffnungsbewegung des Lichtschutzschiebers 33 in Richtung des Pfeiles 50.

Im Gehäuse 31 befindet sich eine Andrückplatte 52 (Fig. 1, 10A, 10B und 11), deren der Gehäuseöffnung 32 zugewandte Vorderseite eine Stützfläche 53 für das in die Kassette eingelegte lichtempfindliche Blatt bildet. Die Andrückplatte 52 ist mit mehreren Durchbrechungen 54 versehen, um beim Laden und Entladen einen raschen Luftdruckausgleich auf der der Andrückplatte zugewandten Rückseite des lichtempfindlichen Blattes zu ermöglichen. Die Andrückplatte 52 steht unter dem Einfluss einer oder mehrerer Blattfedern 55, welche die Andrückplatte in Richtung gegen die Gehäuseöffnung 32 drängen. Zwischen der Gehäuseöffnung 32 und der Andrückplatte 52 befinden sich Rückhalteorgane 56 und 57 (Fig. 1, 10B und 11), die nachstehend unter Bezugnahme auf die Fig. 12A bis 22 näher erläutert werden. Die Rückhalteorgane 56 und 57 haben die Aufgabe, Randpartien der lichtempfindlichen Schicht eines in die Kassette eingelegten lichtempfindlichen Blattes zu übergreifen, derart dass dieses Blatt zwischen den Rückhalteorganen 56 und 57 einerseits und der Stützfläche 53 der Andrückplatte 52 anderseits unter dem Einfluss der Blattfeder 55 eingeklemmt werden kann. Damit aber das lichtempfindliche Blatt bei geöffnetem Lichtschutzschieber 33 durch die Gehäuseöffnung 32 hindurch in Richtung senkrecht zur Ebene des Blattes in die Kassette eingelegt und aus derselben entnommen werden kann, sind die genannten Rückhalteorgane 56 und 57 beweglich angeordnet, so dass sie zum Laden und Entladen der Kassette aus ihren wirksamen Lagen in unwirksame Lagen ausserhalb des Bewegungsweges des Blattes, d.h. ausserhalb der Konturen der Gehäuseöffnung 32, bringbar sind.

Die mit 56 bezeichneten Rückhalteorgane haben die Gestalt von flachen Leisten, die parallel zum Bewegungsweg des Lichtschutzschiebers 33 verlaufend bei den einander gegenüberliegenden Längsrandkanten der Gehäuseöffnung 32 angeordnet sind, wie insbesondere die Fig. 1, 11, 12A, 12B zeigen. Jedes dieser Rückhalteorgane 56 weist zwei Führungszapfen 60 (Fig. 12A, 16) und 61 (Fig. 12B, 17, 18, 20) auf, die je in eine im Gehäuse 31 ausgebildete Führungsnut 62 bzw. 63 eingreifen. Diese Führungsnuten 62 und 63 haben im wesentlichen je einen in bezug auf die Längsrichtung des betreffenden Rückhalteorgans 56 schrägen Verlauf, so dass dieses Rückhalteorgan zwangsläufig derart geführt ist, dass seine Bewegungen jeweils eine Bewegungskomponente in Längsrichtung und eine Bewegungskomponente in Querrichtung des Rückhalteorgans 56 aufweisen. Die Fig. 12A und 12B zeigen eines der Rückhalteorgane 56 in seiner wirksamen Lage, während in den Fig. 16 und 20 das gleiche Rückhalteorgan 56 in seiner unwirksamen Lage gezeigt ist. Man erkennt, dass das dargestellte Rückhalteorgan 56 durch Ausüben einer Kraft in Längsrichtung des Rückhalteorgans (in den Figuren gegen oben) aus der wirksamen Lage in die unwirksame Lage bewegbar ist, wobei das Rückhalteorgan eine quergerichtete Bewegungskomponente in Richtung von dem gegenüberliegenden Rückhalteorgan 56 weg erfährt. Wie und mit welchen Mitteln die erwähnte Kraft auf das Rückhalteorgan 56 ausgeübt wird, ist weiter unten erläutert. Die Bewegungen der Rückhalteorgane 56 erfolgen immer nur in zu der Stützfläche 53 der Andrückplatte 52 parallelen Richtungen.

Nahe bei dem in den Fig. 12A und 16 oberen Ende jedes Rückhalteorgans 56 ist ein Sperrorgan 65 angeordnet, das formschlüssig sowohl mit dem betreffenden Rückhalteorgan 56 als
auch mit dem Lichtschutzschieber 33 zusammenarbeitet. Das
Sperrorgan 65, das besonders deutlich in Fig. 15 veranschaulicht ist, weist eine im Gehäuse 31 der Kassette drehbar gelagerte Achse 66 und zwei an der Achse 66 starr angeordnete
ungleich lange Arme 67 und 68 mit halbzylindrisch gerundeten
Enden auf. Der längere Arm 67 ist gemäss den Fig. 12A und 13
in Anlage an einer Gleitfläche 69 des Rückhalteorgans 56,
welche Gleitfläche 69 rechtwinklig zum Bewegungsweg des
Lichtschutzschiebers 33 steht. Der kürzere Arm 68 arbeitet
mit der benachbarten Längskante des Lichtschutzschiebers 33
zusammen, wie in den Fig. 12A und 14 ersichtlich ist. Es ist
erkennbar, dass der Lichtschutzschieber 33 in seiner Schliesslage das Sperrorgan 65 mittels des kürzeren Armes 68 in der
in Fig. 12A gezeigten Stellung sperrt, bei welcher der längere Arm 67 des Sperrorgans 65 durch Zusammenarbeit mit der
Gleitfläche 69 das benachbarte Rückhalteorgan 56 in der wirksamen Lage, d.h. in Fig. 12A nach unten bewegt, sperrt.
Diese Sperre ist auch bei nur teilweise geöffnetem Lichtschutzschieber 33 aufrechterhalten. Wenn hingegen der Lichtschutzschieber 33 vollständig in seine Offenlage bewegt
ist, befindet sich das von der Griffleiste 34 abgewandte Ende
des Lichtschutzschiebers nicht mehr im Eingriff mit dem kürzeren Arm 68 des Sperrorgans 65, wie deutlich in Fig. 16 gezeigt ist, so dass dann dem Sperrorgan 65 ermöglicht ist, in
die in Fig. 16 dargestellte Stellung zu schwenken und damit
dem benachbarten Rückhalteorgan 56 zu gestatten, in seine unwirksame Lage, d.h. in Fig. 16 nach oben, bewegt zu werden.

Der Einfachheit halber ist in den Fig. 12A, 12B, 16 und 20
nur eines der zwei parallelen Rückhalteorgane 56 dargestellt.
Das bei der gegenüberliegenden Längsrandkante der Gehäuseöffnung 32 angeordnete zweite Rückhalteorgan 56 und die zugehörigen schrägen Führungsnuten 62, 63 wie auch das zugehörige schwenkbare Sperrorgan 65 sind spiegelbildlich gleich ausgebildet und angeordnet.

Es wurde bereits ein weiteres Rückhalteorgan 57 erwähnt. Dieses dritte Rückhalteorgan 57 hat gemäss den Fig. 1, 12B, 19, 20 und 21 die Gestalt einer Leiste, die entlang der von der Griffleiste 34 des Lichtschutzschiebers 33 entfernteren Querrandkante der Gehäuseöffnung 32 angeordnet ist. Jede Endpartie des Rückhalteorgans 57 ist mittels eines Gelenkzapfens 70 mit einem Arm eines zweiarmigen Hebels 71 gekuppelt, der mittels einer Achse 72 im Gehäuse 31 schwenkbar gelagert ist, wie insbesondere die Fig. 12B, 19 und 20 zeigen. Der andere Arm des Hebels 71 ist mittels eines weiteren Gelenkzapfens 73 mit einem Fortsatz 74 des benachbarten Rückhalteorgans 56 gekuppelt. Auf spiegelbildlich gleiche Weist steht die (nicht dargestellte) andere Endpartie des Rückhalteorgans 57 mit dem benachbarten Rückhalteorgan 56 in Wirkungsverbindung. Es leuchtet ein, dass die mit den Längsrichtungen der beiden Rückhalteorgane 56 übereinstimmenden Bewegungskomponenten mittels der Hebel 71 gegenläufige Bewegungen des dritten Rückhalteorgans 57 quer zu seiner Längsrichtung zur Folge haben. Wenn jeweils die beiden Rückhalteorgane 56 in ihre wirksamen Lagen bewegt sind, befindet sich auch das dritte Rückhalteorgan 57 in seiner wirksamen Lage gemäss Fig. 12B, und wenn die beiden Rückhalteorgane 56 in ihre unwirksamen Lagen bewegt werden, gelangt auch das dritte Rückhalteorgan 57 in seine unwirksame Lage gemäss den Fig. 20 und 21. Auch die Bewegungen des dritten Rückhalteorgans 57 erfolgen ausschliesslich in zu der Stützfläche 53 der Andrückplatte 52 parallelen Richtungen.

Zum Bewegen der Rückhalteorgane 56 und 57 aus ihren wirksamen Lagen in ihre unwirksamen Lagen sind die nachstehend beschriebenen Mechanismen vorhanden: Im Gehäuse 31 sind zwei Bohrungen 80 (Fig. 3, 17 und 18) je in der Nähe eines der Rückhalteorgane 56 angeordnet, und zwar derart, dass diese Bohrungen
80 sich parallel zum Bewegungsweg des Lichtschutzschiebers
33 erstrecken. In jeder dieser Bohrungen ist ein Stössel 81
achsial verschiebbar gelagert, der mit einem Kopfstück 82
fest verschraubt ist, welches sich in einer Ausnehmung 83
des Gehäuses 31 befindet, wie die Fig. 17 und 18 zeigen. Die
miteinander verbundenen Teile 81 und 82 bilden zusammen ein
Betätigungsorgan, das an der von der Griffleiste 34 des
Lichtschutzschiebers 33 abgekehrten Endstirnfläche 84 des
Gehäuses 31 von aussen zugänglich und mittels eines Taststiftes 85 (Fig. 18) betätigbar ist. In der Ausnehmung 83
befindet sich auch ein am benachbarten Rückhalteorgan 56 angeordneter Vorsprung 86 mit einer durchgehenden Bohrung 87,
in welcher ein weiterer Stössel 88 achsial verschiebbar gelagert ist, der sich parallel zu den Bewegungswegen des
Lichtschutzschiebers 33 und des Betätigungsorgans 81, 82 erstreckt. Dieser Stössel 88 weist einen Kopf 89 auf, der zum
Zusammenarbeiten mit einer schrägen Gleitfläche 90 des Kopfstückes 82 bestimmt ist, wie die Fig. 17 und 18 sowie auch
die Fig. 12B und 20 erkennen lassen. Zwischen dem Vorsprung
86 und dem Kopf 89 des Stössels ist eine den letzteren umgebende Druckfeder 91 eingeschaltet, die bestrebt ist, den
Kopf 89 des Stössels 88 in Anlage an der Gleitfläche 90 des
Kopfstückes 82 des Betätigungsorgans 81, 82 zu halten und
letzteres in die in den Fig. 12B und 17 gezeigte Ruhelage
zu drängen. Mittels der Druckfeder 91 steht das Betätigungsorgan 81, 82 nachgiebig und kraftschlüssig mit dem benachbarten Rückhalteorgan 56 in Wirkungsverbindung.

Dem bei der gegenüberliegenden Längsrandkante der Gehäuseöffnung 32 angeordneten zweiten Rückhalteorgan 56 ist ein
spiegelbildlich gleich ausgebildeter Mechanismus zum Bewegungsantrieb zugeordnet, was in den Zeichnungen der Einfachheit halber nicht dargestellt ist.

Wie bereits beschrieben wurde, sind bei geschlossenem Lichtschutzschieber 33 die zwei parallelen Rückhalteorgane 56 durch die zugeordneten Sperrorgane 65 in ihren wirksamen Lagen gemäss den Fig. 1, 11, 12A und 12B gesperrt, wodurch auch das mit den Rückhalteorganen 56 gekuppelte dritte Rückhalteorgan 57 in seiner wirksamen Lage gemäss den Fig. 1, 10B und 12B gesperrt ist. Wenn der Photograph beabsichtigt, die Kassette mit einem lichtempfindlichen Blatt zu laden oder ein belichtetes Blatt aus der Kassette zu entnehmen, müssen die Rückhalteorgane 56 und 57 in ihre unwirksamen Lagen bewegt werden, bei denen sie sich ausserhalb der Konturen der Gehäuseöffnung 32 befinden. Zu diesem Zweck werden bei noch geschlossenem Lichtschutzschieber 33 mit Hilfe von zwei in die Bohrungen 80 gleichzeitig eingeführten Taststiften 85 die beiden Betätigungsorgane 81, 82 entgegen dem Einfluss der Druckfedern 91 in die in Fig. 18 gezeigte Lage verschoben, wobei die Druckfedern 91 zusammengedrückt werden, da ja die Rückhalteorgane 56 noch gegen Bewegung in ihre unwirksamen Lagen gesperrt sind. Wenn nachher der Lichtschutzschieber 33 (bei mittels des Fortsatzes 47 entriegeltem Verriegelungsorgan 45; Fig. 7 bis 9) geöffnet wird, gelangt der Lichtschutzschieber 33 ausser Eingriff mit dem kürzeren Arm 68 jedes Sperrorgans 65, wodurch letzterem erlaubt wird, in eine das betreffende Rückhalteorgan 56 freigebende Stellung gemäss Fig. 16 zu schwenken. Hierauf ist die in jeder Druckfeder 91 gespeicherte Kraft imstande, das betreffende Rückhalteorgan 56 in seine unwirksame Lage gemäss den Fig. 16, 20 und 22 zu bewegen. Mittels der zweiarmigen Hebel 71 wird gleichzeitig auch das dritte Rückhalteorgan 57 in seine unwirksame Lage gemäss den Fig. 20 und 21 bewegt. Dann ist der Weg frei für ein lichtempfindliches Blatt, das in Richtung senkrecht zur Ebene des Blattes durch die Gehäuseöffnung 32 hindurch, vorzugsweise unter dem Einfluss der Schwerkraft, in die Kassette eingelegt oder aus derselben entnommen werden kann.

Wenn man den Lichtschutzschieber 33 in seine Schliesslage
bewegt, gelangen seine von der Griffleiste 34 abgewandten
Eckpartien und seine Längskanten in Eingriff mit dem kürzeren
Arm 68 jedes Sperrorgans 65, wodurch die Sperrorgane 65 aus
ihren in Fig. 16 gezeigten Stellungen in die Stellungen gemäss Fig. 12A geschwenkt werden. Dabei drückt die gerundete
Endpartie des längeren Armes 67 jedes Sperrorgans 65 auf
die Gleitfläche 69 des benachbarten Rückhalteorgans 56, wodurch letzteres in seine wirksame Lage zurückbewegt wird, unabhängig davon, ob das zugeordnete Betätigungsorgan 81, 82
sich in seiner Ruhelage gemäss Fig. 17 befindet oder immer
noch mittels des Taststiftes 85 in die in Fig. 18 gezeigte
Lage verschoben ist. Durch die beschriebenen Bewegungen der
beiden Rückhalteorgane 56 wird mittels der zweiarmigen Hebel
71 auch das dritte Rückhalteorgan 57 in seine wirksame Lage
zurückbewegt.

Bei der Benützung der Kassette 30 an einer photographischen
Grossformat - Fachkamera bleiben die Betätigungsorgane 81, 82
unbewegt in ihren Ruhelagen gemäss den Fig. 12B und 17, weshalb dann die Rückhalteorgane 56 und 57 in ihren wirksamen
Lagen verharren, wenn der Lichtschutzschieber 33 zwecks Belichtung des in die Kassette geladenen lichtempfindlichen
Blattes geöffnet und nachher wieder geschlossen wird.

Das Kopfstück 82 eines jeden Betätigungsorgans 81, 82 weist
gemäss den Fig. 12B, 20 und 21 einen Vorsprung 95 auf, der
gemäss Fig. 21 mit einer schrägen Gleitfläche 96 versehen
ist. Letztere ist zum Zusammenarbeiten mit einem seitlich vorstehenden Lappen 97 der Andrückplatte 52 bestimmt, derart
dass jeweils beim Betätigen des Betätigungsorgans 81, 82 entgegen dem Einfluss der Druckfeder 91 die schräge Gleitfläche
96 mit dem Lappen 97 der Andrückplatte 52 in Eingriff gelangt und dabei eine Bewegung der Andrückplatte sowohl in zum Bewegungsweg des Lichtschutzschiebers 33 paralleler
Richtung als auch entgegen dem Einfluss der Blattfedern 55
in Richtung von der Gehäuseöffnung 32 weg, d.h. in Fig. 21
nach links und in Fig. 22 nach oben, hervorgerufen wird. Die
der Andrückplatte 52 erteilte Bewegungskomponente in zum Bewegungsweg des Lichtschutzschiebers 33 paralleler Richtung
hat zur Folge, dass das näher bei der Griffleiste 34 des
Lichtschutzschiebers 33 liegende Ende 98 (Fig. 10A) der Andrückplatte 52 in Eingriff mit einer stationären schrägen
Gleitfläche 99 des Gehäuses 31 gelangt, wodurch auch der an
das Ende 98 angrenzenden Partie der Andrückplatte 52 eine
Bewegungskomponente in Richtung von der Gehäuseöffnung 32
weg erteilt wird. Somit wird jeweils beim Betätigen der beiden Betätigungsorgane 81, 82 die Andrückplatte 52 automatisch
von den in ihren wirksamen Lagen befindlichen Rückhalteorganen 56 und 57 entgegen dem Einfluss der Blattfedern 55 weggedrängt und dadurch die Klemmung von Randpartien eines in
der Kassette vorhandenen lichtempfindlichen Blattes zwischen
der Andrückplatte und den Rückhalteorganen 56 und 57 gelöst,
bevor beim nachfolgenden Oeffnen des Lichtschutzschiebers 33
die Rückhalteorgane 56 und 57 in ihre unwirksamen Lagen bewegt werden. Umgekehrt werden beim Laden der Kassette mit
einem lichtempfindlichen Blatt die Rückhalteorgane 56 und 57
durch das Schliessen des Lichtschutzschiebers 33 in ihre
wirksamen Lagen bewegt, bevor die Andrückplatte 52 zum Festklemmen von Randpartien des eingelegten Blattes freigegeben
wird, sofern die Betätigungsorgane 81, 82 mittels der Taststifte 85 noch entgegen dem Einfluss der Druckfedern 91 betätigt sind, wenn der Lichtschutzschieber 33 geschlossen wird.

Diese Wirkungsweise bringt den Vorteil, dass während den Bewegungen der Rückhalteorgane 56 und 57 in ihre unwirksamen
Lagen un in ihre wirksamen Lagen die Andrückplatte 52 entgegen dem Einfluss der Blattfedern 55 zurückgedrängt ist und
keine die Rückhalteorgane in ihren Bewegungen hemmende Reibungskräfte ausüben kann. Ein noch entscheidenderer Vorteil
aber ist, dass während der Bewegung der Rückhalteorgane 56
und 57 aus ihren unwirksamen in ihre wirksamen Lagen zwischen der Andrückplatte 52 einerseits und den Bewegungsbahnen
der Rückhalteorgane 56 und 57 anderseits ein genügend grosser Zwischenraum für die Randpartien eines in die Kassette
eingelegten lichtempfindlichen Blattes vorhanden ist, damit
die Rückhalteorgane 56 und 57 ungehindert und ohne störende
Berührung des lichtempfindlichen Blattes in ihre wirksamen
Lagen bewegbar sind, bei welchen sie Randpartien der lichtempfindlichen Schicht des Blattes übergreifen.

Das dritte bewegliche Rückhalteorgan 57 weist gemäss Fig. 10B
eine Anschlagfläche 101 auf, die rechtwinklig zum Bewegungsweg dieses Rückhalteorgans steht und dazu bestimmt ist, ein
durch die Gehäuseöffnung 32 in die Kassette eingelegtes lichtempfindliches Blatt entlang der Stützfläche 53 der (entgegen
dem Einfluss der Blattfedern 55 zurückgedrängten) Andrückplatte 52 zu verschieben, wenn das Rückhalteorgan 57 in seine
wirksame Lage bewegt wird. Dieses Verschieben des eingelegten
lichtempfindlichen Blattes hat den Zweck, die vom Rückhalteorgan 57 abgewandte Querkante des Blattes unter eine am Gehäuse 31 gebildete stationäre Anlagefläche 102 (Fig. 10A)
bei der näher bei der Griffleiste 34 liegenden Querrandkante
der Gehäuseöffnung 32 zu schieben. Eine schräg verlaufende
Flächenpartie 103 dient der Führung von gegebenenfalls aufragenden Kantenpartien des lichtempfindlichen Blattes zur Anlagefläche 102 hin. Wenn die Andrückplatte 52 freigegeben
wird, nachdem die beweglichen Rückhalteorgane 56 und 57 in
ihre wirksamen Lagen bewegt worden sind, wird die die Anlagefläche 102 untergreifende Randpartie des in die Kassette eingelegten Blattes unter dem Einfluss der Blattfedern 55 mittels
der Andrückplatte 52 an die Anlagefläche 102 gedrückt. Am
beweglichen Rückhalteorgan 57 ist gemäss Fig. 10B ebenfalls
eine schräge Fläche 104 vorhanden, um bei der Bewegung dieses Rückhalteorgans in seine wirksame Lage gegebenenfalls aufragende Kantenpartien des durch die Gehäuseöffnung 32 hindurch in die Kassette eingelegten lichtempfindlichen Blattes
zu der Anschlagfläche 101 hin und unter eine Anlagefläche
105 zu führen.

Im Gehäuse 31 ist gemäss den Fig. 10A und 23 bis 26 ein bewegliches Fühlerorgan 110 vorhanden, das in einer Richtung
parallel zum Bewegungsweg des Lichtschutzschiebers 33 verschiebbar gelagert und derart angeordnet ist, dass es durch
das in die Kassette eingelegte lichtempfindliche Blatt betätigbar ist, wenn letzteres mittels des dritten Rückhalteorgans 57 verschoben wird, wie vorstehend beschrieben wurde.
Das Fühlerorgan 110 steht unter dem Einfluss einer Biegefeder 111 (Fig. 23 bis 26), die bestrebt ist, das Fühlerorgan
entgegen der genannten Verschiebung des lichtempfindlichen
Blattes in die Ausgangslage gemäss den Fig. 10A und 23 zu bewegen. Das Fühlerorgan 110 hat zwei Aufgaben, von denen die
erste darin besteht, das in der Kassette liegende lichtempfindliche Blatt beim Entladen der Kassette in eine mit der Gehäuseöffnung 32 übereinstimmende Lage zurückzuschieben, wenn der
Lichtschutzschieber 33 geöffnet wird und die beweglichen
Rückhalteorgane 56 und 57 ihre unwirksamen Lagen einnehmen.
Die zweite Aufgabe des Fühlerorgans 110 ist es, ein erstes
Anzeigeorgan 112 (Fig. 23 bis 26) zur visuellen Anzeige des
jeweiligen Ladezustandes der Kassette zu betätigen. Das Anzeigeorgan 112 ist eine abgewinkelte Partie eines mittels
eines Lagerzapfens 113 schwenkbar gelagerten Hebels 114 und
ist durch eine seitliche Fensteröffnung 115 des Gehäuses 31
hindurch sichtbar, wenn das Fühlerorgan 110 sich in seiner
Ruhelage befindet, d.h. wenn kein lichtempfindliches Blatt in
der Kassette liegt. Zur Kupplung des Fühlerorgans 110 mit
dem Hebel 114 dienen die bereits erwähnte Biegefeder 111 und
ein mit dieser zusammenarbeitender Anschlaglappen 116 am
Hebel 114.

Ebenfalls um den Lagerzapfen 113 schwenkbar ist ein weiterer
Hebel 120, welcher eine abgewinkelte Partie zur Bildung eines zweiten Anzeigeorgans 121 aufweist, das ebenfalls in eine
durch die Fensteröffnung 115 hindurch sichtbare Lage bringbar ist. Zwischen einem Arm 122 des Hebels 120 und einem im
Gehäuse 31 befestigten Stift 123 ist eine Zugfeder 124 angeordnet, die bestrebt ist, den Hebel 120 in die in Fig. 23
gezeigte Lage zu schwenken, bei welcher das zweite Anzeigeorgan 121 von der Fensteröffnung 115 weggeschwenkt und deshalb von aussen unsichtbar ist. Die das zweite Anzeigeorgan
121 tragende Endpartie des Hebels 120 weist ferner einen
Fortsatz 125 auf, der zum Zusammenarbeiten mit der benachbarten Längskante des Lichtschutzschiebers 33 bestimmt ist.
In die genannte Längskante des Lichtschutzschiebers 33 ist
ein z.B.dreieckförmiger Randausschnitt 126 eingearbeitet,
in welchen der Fortsatz 125 eingreift, wenn der Lichtschutzschieber in seine Schliesslage bewegt ist und der Hebel 120
sich in der in Fig. 23 dargestellten Ruhelage befindet. Es
leuchtet ein, dass beim Bewegen des Lichtschutzschiebers 33
aus seiner Schliesslage gegen seine Offenlage der Fortsatz
125 aus dem Randausschnitt 126 herausgedrängt wird, wie Fig.
26 zeigt, was eine Verschwenkung des Hebels 120 entgegen dem
Einfluss der Zugfeder 124 zur Folge hat, so dass dann das
zweite Anzeigeorgan 121 in der Fensteröffnung 115 sichtbar
wird, das sich zweckmässig durch Form und Farbe vom ersten
Anzeigeorgan 112 unterscheidet.

Schliesslich ist der Hebel 120 mit einem als Sperrklinke dienenden Vorsprung 127 versehen, der zum Zusammenarbeiten mit
einem Riegel 130 bestimmt ist. Letzterer ist im Gehäuse 131
verschiebbar gelagert, und zwar so, dass er in zur Bewegungsbahn des Lichtschutzschiebers 33 rechtwinkliger Richtung in
eine wirksame Verriegelungslage gemäss Fig. 26 und in eine
unwirksame Entriegelungslage gemäss den Fig. 23 und 25 bewegbar ist. Der Riegel 130 steht unter dem Einfluss einer Druckfeder 131, die bestrebt ist, den Riegel 130 in die Verriegelungslage zu drängen, bei welcher eine Endpartie 132 des
Riegels 130 in eine Nut 133 hineinragt, die an einer der
schmalen Längsseiten des Gehäuses 31 aussen angeordnet ist.
Der Riegel 130 weist ferner eine Anschlagfläche 134 auf, mit
welcher der als Sperrklinke dienende Vorsprung 127 des Hebels 120 in Eingriff treten kann, um den Riegel 130 in seiner
unwirksamen Entriegelungslage entgegen dem Einfluss der Druckfeder 131 zu sperren.

Die Gebrauchs- und Wirkungsweise der mit Bezug auf die Fig.
23 bis 26 beschriebenen Mechanismen ist wie folgt: Beim Laden
der Kassette mit einem lichtempfindlichen Blatt wird durch
letzteres - wie bereits erwähnte - das Fühlerorgan 110 aus
seiner Ruhelage gemäss Fig. 23 in die in Fig. 25 gezeigte
Lage bewegt. Hierdurch wird mittels der Biegefeder und des
Anschlaglappens 116 der Hebel 114 so verschwenkt, dass das
erste Anzeigeorgan 112 von der Fensteröffnung 115 weg in eine
unsichtbare Lage bewegt wird. Wenn am Ende des Ladevorganges
der Lichtschutzschieber 33 vollständig in seine Schliesslage
bewegt ist, befindet sich der Randausschnitt 126 des Lichtschutzschiebers im Arbeitsbereich des Fortsatzes 125, um diesem zu gestatten, mit dem Randausschnitt 126 in Eingriff zu
treten. Dies ist aber erst möglich, wenn zuvor noch der Riegel 130 z.B. manuell in seine Entriegelungslage geschoben
wird, indem man auf die Endpartie 132 eine den Einfluss der
Druckfeder 131 überwindende Kraft ausübt. Sobald der Riegel
130 seine Entriegelungslage erreicht hat, rastet der als
Sperrklinke dienende Vorsprung 127 des Hebels 120 unter dem
Einfluss der Zugfeder 124 vor der Anschlagfläche 134 des Riegels ein, um diesen in der Entriegelungslage zu sperren. Dabei gelangt auch das zweite Anzeigeorgan 121 von der Fensteröffnung 115 weg in eine unsichtbare Lage, wie in Fig. 23 veranschaulicht ist. An der Tatsache, dass nun keines der Anzeigeorgane   112 und 121 in der Fensteröffnung 115 sichtbar ist, erkennt der Photograph jederzeit, dass die Kassette mit einem noch unbelichteten lichtempfindlichen Blatt geladen ist.

Wenn die geladene Kassette an eine photographische Kamera angebracht ist und zum Belichten des lichtempfindlichen Blattes der Lichtschutzschieber 33 in seine Offenlage bewegt wird, wird der Fortsatz 125 des Hebels 120 aus dem Randausschnitt 126 des Lichtschutzschiebers herausgedrängt. Dies hat eine Verschwenkung des Hebels 120 entgegen dem Einfluss der Zugfeder 124 zur Folge, wodurch der als Sperrklinke dienende Vorsprung 127 von der Anschlagfläche 134 des Riegels 130 abgleitet und deshalb letzterem gestattet wird, unter dem Einfluss der Druckfeder 131 in die Verriegelungslage gemäss Fig. 26 bewegt zu werden. Durch die Verschwenkung des Hebels 120 wird ferner das zweite Anzeigeorgan 121 in den Bereich der Fensteröffnung 115 bewegt. Beim Schliessen des Lichtschutzschiebers nach dem Belichten des lichtempfindlichen Blattes gelangt zwar der Randausschnitt 126 des Lichtschutzschiebers wieder in den Bewegungsbereich des Fortsatzes 125, was dem Hebel 120 erlauben würde, in seine Ausgangslage zurückzukehren. Da nun aber der Riegel 130 in seine Verriegelungslage bewegt worden ist, steht der als Sperrklinke dienende Vorsprung 127 des Hebels 120 jetzt einer Anschlagfläche 135 des Riegels 130 gegenüber, wodurch dem Hebel 120 verwehrt ist, unter dem Einfluss der Zugfeder 124 in die Ausgangslage zurückzuschwenken. Demzufolge bleibt das zweite Anzeigeorgan 121 in der Fensteröffnung sichtbar, um dem Photographen visuell anzuzeigen, dass in der Kassette ein belichtetes Blatt vorhanden ist. Die in die Nut 133 des Gehäuses 31 vorstehende Endpartie 132 hat die Aufgabe, ein versehentliches Anbringen der Kassette an einer Kamera zu verhindern. Dadurch lassen sich ungewollte Doppelbelichtungen eines lichtempfindlichen Blattes vermeiden. Will der Photograph bewusst eine zweite oder weitere Belichtung des lichtempfindlichen Blattes machen, kann er jeweils vorher den

0247405

Riegel 130 durch Ausüben einer Kraft auf dessen Endpartie
132 zurückschieben, bis der als Sperrklinke dienende Vorsprung
127 des Hebels 120 erneut vor der Anschlagfläche 134 des Riegels einrastet.

Die nach dem Belichten des in die Kassette geladenen lichtempfindlichen Blattes vorstehende Endpartie 132 des Riegels
130 kann ferner dazu dienen, das Einsetzen der Kassette in
eine Ladeeinrichtung, wie sie weiter unten mit Bezugnahme
auf Fig. 27 beispielsweise beschrieben wird, zu verhindern,
um ein versehentliches Laden der bereits geladenen Kassette
mit einem zweiten Blatt zu verhüten.

Wenn die Kassette entladen ist und der Riegel 130 nicht in
seine unwirksame Entriegelungslage zurückgeschoben ist, sind
in der Fensteröffnung 115 das erste und das zweite Anzeigeorgan 112 bzw. 121 zugleich sichtbar, wodurch dem Photographen visuell angezeigt wird, dass sich kein lichtempfindliches Blatt in der Kassette befindet. Ausserdem verhindert die
in die Nut 133 des Gehäuses 31 vorstehende Endpartie 132 des
Riegels 130 ein versehentliches Benutzen der leeren Kassette
an einer Kamera.

Eine vorteilhafte Ladeeinrichtung zum halbautomatischen Laden
der beschriebenen Kassette 30 bei vollem Umgebungslicht ist
in Fig. 27 schematisch veranschaulicht. Die dargestellte Ladeeinrichtung 140 weist eine gehäuseartige Haltevorrichtung 142
mit einem unteren Innenraum 143, in welche die zu ladende
Kassette 30 nach Art einer Schublade einsetzbar ist, und einen
oberen Innenraum 144, in den ein Container 145 zum Zubringen eines Stapels lichtempfindlicher Blätter ebenfalls nach
Art einer Schublade einsetzbar ist, auf. Der Container besteht aus einem den (nicht dargestellten) Stapel der lichtempfindlichen Blätter enthaltenden Gehäuse 146 mit einer in
bezug auf Form und Grösse den Flächenabmessungen der Blätter
angepassten Oeffnung 147 und einem Lichtschutzschieber 148, der in eine die Oeffnung 147 lichtdicht schliessende Schliesslage und in eine diese Oeffnung gänzlich freigebende Offenlage bewegbar ist. Aus Fig. 27 ist ersichtlich, dass die Gehäuseöffnung 32 der Kassette 30 nach oben gekehrt und die
Oeffnung 147 des Containers 145 nach unten gerichtet ist.

Zwischen dem unteren Innenraum 143 und dem oberen Innenraum
144 der Haltevorrichtung 142 befindet sich eine in letztere
integrierte Separiervorrichtung 150. Diese weist einen Stauraum 151 zur Aufnahme eines Stapels aus mehreren lichtempfindlichen Blättern und ein bewegliches, z.B. drehbares Vereinzelungsorgan 152 zum Abstützen des genannten Stapels wie auch
zum Trennen des jeweils untersten Blattes vom Stapel und zum
Uebergeben des abgetrennten Blattes in eine weiter unten liegende Ausgabeöffnung 153 auf. Das Vereinzelungsorgan 152 ist
im wesentlichen eine ebene Scheibe, deren Dickenabmessung
etwas kleiner als die Dicke eines einzelnen lichtempfindlichen Blattes ist. In seiner Mittelpartie weist das Vereinzelungsorgan 152 eine Durchbrechung 154 auf, die nach Form und
Grösse mit jedem einzelnen lichtempfindlichen Blatt übereinstimmt. Unmittelbar unterhalb des Vereinzelungsorgans 152 befindet sich ein unterer Lichtschutzschieber 155, der wahlweise in eine die Ausgabeöffnung 153 lichtdicht verschliessende Schliesslage oder in eine diese Oeffnung zur Gänze freigebende Offenlage bewegbar ist. Durch hier nicht dargestellte
mechanische Verbindungsmittel ist der Lichtschutzschieber 155
mit dem Vereinzelungsorgan 152 derart gekuppelt, dass durch
nacheinanderfolgende Bewegungen des Lichtschutzschiebers 155
in seine Offenlage und zurück in seine Schliesslage das Vereinzelungsorgan 152 automatisch um einige Winkelgrade gedreht
und zurückgedreht wird, wodurch das unterste Blatt vom Stapel
der lichtempfindlichen Blätter getrennt und in die Ausgabeöffnung 153 übergeben wird. Einzelheiten betreffend den Aufbau und die Wirkungsweise der Separiervorrichtung 150 sind
in der DE-Offenlegungsschrift 34 16 064 publiziert, weshalb
hier auf nähere Erläuterungen verzichtet werden kann.

Der Stauraum 151 der Separiervorrichtung 150 weist oben eine
Eintrittsöffnung 156 auf, die in bezug auf Form, Grösse und
Lage mit der Oeffnung 147 des in die Haltevorrichtung 142
eingesetzten Containers 145 übereinstimmt. Der Eintrittsöffnung 156 des Stauraumes 151 ist ein oberer Lichtschutzschieber 157 zugeordnet, der in eine diese Oeffnung 156
lichtdicht verschliessende Schliesslage und in eine die Oeffnung gänzlich freigebende Offenlage bewegbar ist. In Fig. 27
ist ersichtlich, dass der zuletzt erwähnte obere Lichtschutzschieber 157 und der Lichtschutzschieber 148 des in die
Haltevorrichtung 142 eingesetzten Containers 145 parallel zueinander angeordnet und in parallelen Richtungen bewegbar
sind. Weiter ist erkennbar, dass der obere Lichtschutzschieber
157 der Separiervorrichtung 150 mit einem Handgriff 158 versehen ist, der einen Vorsprung 159 aufweist, welcher mit einer
entsprechenden Vertiefung 160 einer als Handgriff dienenden
Leiste 161 am Lichtschutzschieber 148 des Containers 145 in
Kupplungseingriff tritt, wenn der Container in die Haltevorrichtung 142 korrekt eingesetzt wird. Hierdurch werden die
beiden Lichtschutzschieber 148 und 157 miteinander gekuppelt,
so dass sie jeweils zusammen und gleichsinnig in ihre Offenlagen und Schliesslagen bewegbar sind. Im Innenraum 144 zur
Aufnahme des Containers 145 befinden sich Federn 162, z.B. in
Gestalt von Blattfedern, die selbsttätig den eingesetzten
Container nach unten drücken, um einen lichtdichten Kontakt
zwischen dem Container und der Separiervorrichtung 150 zu gewährleisten und die erwähnte Kupplung der beiden Lichtschutzschieber 148 und 157 herbeizuführen. Unter dem Einfluss der Federn 162 wird ferner erreicht, dass eine quer zur Einschubrichtung des Containers 145 verlaufende Rippe 163 des Gehäuses 146 selbsttätig in Eingriff mit einer entsprechenden Nut
164 an der Oberseite der Separiervorrichtung 150 gelangt,
wodurch der Container gegen unbeabsichtigtes Herausgleiten
aus der Haltevorrichtung 142, insbesondere beim Oeffnen des
Lichtschutzschiebers 148, gesichert wird.

Die Ausgabeöffnung 153 der Separiervorrichtung 150 stimmt in bezug auf Form, Grösse und Lage mit der Gehäuseöffnung 32 der in die Haltevorrichtung 142 korrekt eingesetzten Kassette 30 überein, und der untere Lichtschutzschieber 155 der Separiervorrichtung 150 und der Lichtschutzschieber 33 der Kassette 30 sind parallel zueinander angeordnet und in parallelen Richtungen bewegbar. Der untere Lichtschutzschieber 155 der Separiervorrichtung 150 weist einen Handgriff 168 mit einem Vorsprung 169 auf, der mit einer entsprechenden Vertiefung 170 der Griffleiste 34 des Lichtschutzschiebers 33 der Kassette 30 in Kupplungseingriff tritt, wenn die Kassette in die Haltevorrichtung 142 korrekt eingesetzt wird. Hierdurch werden die beiden Lichtschutzschieber 33 und 155 miteinander gekuppelt, so dass sie jeweils zusammen und gleichsinnig in ihre Offenlagen und Schliesslagen bewegbar sind. Im Innenraum 143 zur Aufnahme der Kassette 30 befinden sich Federn 172, z.B. in Gestalt von Blattfedern, die selbsttätig die eingesetzte Kassette 30 nach oben drücken, um einen lichtdichten Kontakt zwischen der Kassette und der Separiervorrichtung 150 zu gewährleisten und die erwähnte Kupplung der beiden Lichtschutzschieber 33 und 155 herbeizuführen. Unter dem Einfluss der Federn 172 wird ferner erreicht, dass eine an der Kassette 30 angeordnete, quer zu ihrer Einschubrichtung verlaufende Rippe 173 selbsttätig in Eingriff mit einer entsprechenden Nut 174 an der Unterseite der Separiervorrichtung 150 gelangt, wodurch die Kassette gegen unbeabsichtigtes Herausgleiten aus der Haltevorrichtung 142, insbesondere beim Oeffnen des Lichtschutzschiebers 33, gesichert wird. Im Innenraum 143 sind zwei Taststifte 85 fest angeordnet, von denen in Fig. 27 nur einer sichtbar ist. Diese Taststifte sind zum Zusammenarbeiten mit den Betätigungsorganen 81, 82 (Fig. 17 und 18) der Kassette bestimmt, um beim Einsetzen der Kassette in die Haltevorrichtung 142 automatisch eine Betätigung der beiden Betätigungsorgane 81, 82 zu gewährleisten.

Die Gebrauchsweise der beschriebenen Kassetten-Ladeeinrichtung 140 gemäss Fig. 27 ist wie folgt:

Es ist angenommen, dass der Stauraum 151 der Separiervorrichtung 150 leer ist und die beiden Lichtschutzschieber 155 und 157 der Separiervorrichtung geschlossen sind. Weiter ist angenommen, dass im Gehäuse 146 des Containers 145 ein Stapel aus zwanzig bis fünfzig unbelichteten photographischen Filmblättern vorhanden ist, die entweder im Herstellerwerk oder durch den Photographen bei Dunkelheit in den Container eingebracht worden sind, und dass die lichtempfindliche Schicht jedes Filmblattes vom Lichtschutzschieber 148 abgewandt ist. Der Lichtschutzschieber 148 des Containers 145 ist geschlossen, um die Filmblätter gegen Umgebungslicht abzuschirmen. Der gefüllte Container 145 wird in der aus Fig. 27 ersichtlichen Weise in den Innenraum 144 der Haltevorrichtung 142 eingesetzt, wobei unter dem Einfluss der Federn 162 der Kupplungsvorsprung 159 am Handgriff 158 des oberen Lichtschutzschiebers 157 der Separiervorrichtung 150 mit der zugeordneten Vertiefung 160 am Handgriff 161 des Lichtschutzschiebers 148 des Containers 145 in Kupplungseingriff gelangt. Nachher kann der Photograph die beiden miteinander gekuppelten Lichtschutzschieber 148 und 157 zusammen in ihre Offenlagen bewegen, wonach der Stapel der photographischen Filmblätter unter dem Einfluss der Schwerkraft in zu den Filmblättern senkrechter Richtung aus dem Container 145 in den Stauraum 151 der Separiervorrichtung fällt. Nachher schiebt der Photograph die beiden gekuppelten Lichtschutzschieber 148 und 157 zusammen in ihre Schliesslagen zurück. Anschliessend kann der leere Container 145 aus der Haltevorrichtung 142 herausgezogen und gegebenenfalls einem anderen Verwendungszweck zugeführt werden.

Wenn in irgend einem späteren Zeitpunkt der Photograph eine photographische Kassette 30 mit einem unbelichteten Filmblatt laden will, schiebt er die Kassette mit geschlossenem Lichtschutzschieber 33 in den unteren Innenraum 143 der Haltevorrichtung 142 ein, wie in Fig. 27 gezeigt ist. Dabei gelangen die zwei Taststifte 85 in Eingriff mit den beiden Betätigungsorganen 81, 82 der Kassette, wodurch diese Betätigungsorgane automatisch betätigt werden, wie mit Bezug auf Fig. 18 beschrieben wurde. Hierdurch werden die Druckfedern 91 (Fig. 17 und 18) gespannt, und die Andrückplatte 52 wird entgegen dem Einfluss der ihr zugeordneten Blattfedern 55 von den sich noch in wirksamen Lagen befindlichen Rückhalteorganen 56 und 57 weg zurückgedrängt. Beim Einsetzen der Kassette 30 gelangt ferner unter dem Einfluss der Federn 172 der Kupplungsvorsprung 169 am Handgriff 168 des unteren Lichtschutzschiebers 155 der Separiervorrichtung 150 in Kupplungseingriff mit der zugeordneten Vertiefung 170 in der Griffleiste des Lichtschutzschiebers der Kassette 30. Schliesslich wird durch das Anpressen der Kassette 30 an die Separiervorrichtung 150 durch die Federn 172 automatisch der Fortsatz 49 des Verriegelungsorgans 45 (Fig. 7 bis 9) des Lichtschutzschiebers der Kassette betätigt und damit der Lichtschutzschieber entriegelt, so dass er nachher geöffnet werden kann.

Wenn nachher der Photograph die beiden miteinander gekuppelten Lichtschutzschieber 33 und 155 der Kassette und der Separiervorrichtung zusammen in ihre Offenlagen bewegt, geschieht folgendes: Durch das Oeffnen des Lichtschutzschiebers 33 der Kassette wird - wie mit Bezug auf die Fig. 16 und 20 beschrieben wurde - den beweglichen Rückhalteorganen 56 und 57 gestattet, unter dem Einfluss der gespannten Druckfedern 91 ihre unwirksamen Lagen einzunehmen, bei denen sie sich ausserhalb der Konturen der Gehäuseöffnung 32 der Kassette befinden. Durch das Oeffnen des unteren Lichtschutzschiebers 155 der Separiervorrichtung 150 wird das Vereinzelungsorgan 152 betätigt, derart dass das unterste Filmblatt vom übrigen Stapel im Stauraum 151 der Separiervorrichtung getrennt wird und anschliessend unter dem Einfluss der Schwerkraft durch die Ausgabeöffnung 153 hindurch in die Kassette 30 fällt, und zwar in zur Ebene des Filmblattes senkrechter Richtung. (Die Wirkungsweise des Vereinzelungsorgans 152 ist in
der bereits erwähnten DE-Offenlegungsschrift 34 16 064 erklärt.) Nachher schiebt der Photograph die beiden gekuppelten
Lichtschutzschieber 33 und 155 in ihre Schliesslagen zurück.
Durch das Schliessen des Lichtschutzschiebers der Kassette 30
werden die beweglichen Rückhalteorgane 56 und 57 gezwungen,
ihre wirksamen Lagen einzunehmen, bei denen sie je eine Randpartie des in die Kassette eingelegten Filmblattes übergreifen. Nachher kann der Photograph die nunmehr geladene Kassette 30 aus der Haltevorrichtung 142 herausnehmen, wobei automatisch die Taststifte 85 ausser Eingriff mit den Betätigungsorganen 81, 82 gelangen. Unter dem Einfluss der Druckfedern
91 (Fig. 18) bewegen sich die Betätigungsorgane 81, 82 in
ihre Ruhelagen gemäss Fig. 17 zurück, wodurch die Andrückplatte 52 der Kassette freigegeben wird, so dass sie nachher
unter dem Einfluss der ihr zugeordneten Blattfedern 55 das
in die Kassette eingebrachte Filmblatt an die Rückhalteorgane
56 und 57 andrückt und damit in planer Lage festhält. Auf die
beschriebene Weise lassen sich die im Stauraum 151 der Separiervorrichtung 150 gestapelten Filmblätter bei vollem Umgebungslicht einzeln nacheinander in Kassetten einbringen.

An der jeweils geladenen Kassette 30 ist der Markierungsläufer 41 auf dasjenige Emulsionsdatenfeld 40 einzustellen, dessen Daten auf die lichtempfindliche Schicht des in die Kassette eingebrachten Filmblattes zutrifft. Ferner ist noch
der Riegel 130 (Fig. 25) durch einen Druck auf die in die Nut
133 vorstehende Endpartie 132 in seine unwirksame Entriegelungslage zu schieben, in welcher er durch den als Sperrklinke
dienenden Vorsprung 127 festgehalten wird, wie Fig. 25 zeigt.

Fig. 28 zeigt ein Beispiel einer anderen Einrichtung 180,
die ermöglicht, bei vollem Umgebungslicht ein belichtetes
oder allenfalls noch unbelichtetes Filmblatt ohne störenden
Lichteinfall halbautomatisch aus einer Kassette 30 in einen
Container 145 zu transportieren, d.h. die Kassette zu entladen. Diese Einrichtung 180 weist eine gehäuseartige Haltevorrichtung 182 mit einem unteren Innenraum 183, in welchen
der Container 30 nach Art einer Schublade einsetzbar ist,
und einen oberen Innenraum 184 auf, in den die zu entladende
Kassette 30 ebenfalls nach Art einer Schublade einsetzbar
ist. Es ist ersichtlich, dass die Oeffnung 147 des in die
Haltevorrichtung 182 eingesetzten Containers 145 nach oben
gerichtet ist, während die Gehäuseöffnung 32 der in die Haltevorrichtung eingesetzten Kassette 30 nach unten gerichtet
ist. Zwischen dem unteren Innenraum 183 und dem oberen Innenraum 184 weist die Haltevorrichtung 182 einen Zwischenboden
185 mit einer Durchbrechung 186 auf, die in bezug auf Form,
Grösse und Lage mit den Oeffnungen des Containers 145 und
der Kassette 30 übereinstimmt, wenn diese korrekt in die Haltevorrichtung 182 eingesetzt sind.

Der Durchbrechung 186 ist ein in den Zwischenboden 185 eingelassener Lichtschutzschieber 187 zugeordnet. Letzterer und
die Lichtschutzschieber 148 und 33 des in die Haltevorrichtung 182 eingesetzten Containers 145 bzw. der in die Haltevorrichtung eingesetzten Kassette 30 sind parallel zueinander angeordnet und in parallelen Richtungen bewegbar. Aus Fig. 28
ist ersichtlich, dass der in den Zwischenboden 185 eingelassene Lichtschutzschieber 187 ein Kupplungsstück 188 mit zwei
nach unten bzw. nach oben ragenden Vorsprüngen 189 und 190
aufweist, die dazu bestimmt sind, mit den Vertiefungen 160
und 170 der Handgriffe 161 und 34 der Lichtschutzschieber
des Containers 145 bzw. der Kassette 30 in Kupplungseingriff
zu treten. Hierdurch werden alle drei Lichtschutzschieber
148, 187 und 33 miteinander gekuppelt, so dass sie jeweils
zusammen und gleichsinnig in ihre Offenlagen und Schliesslagen bewegbar sind.

Im unteren Innenraum 183 zur Aufnahme des Containers 145 befinden sich Federn 191, z.B. in Gestalt von Blattfedern, die
selbsttätig den eingesetzten Container nach oben drücken, um einen lichtdichten Kontakt zwischen dem Container und dem Zwischenboden 185 zu gewährleisten und die erwähnte Kupplung der Lichtschutzschieber 148 und 187 herbeizuführen. Unter dem Einfluss der Federn 191 wird ferner erreicht, dass die quer zur Einschubrichtung des Containers 145 verlaufende Rippe 163 des Containers selbsttätig mit einer entsprechenden Nut 193 an der Unterseite des Zwischenbodens 185 in Eingriff gelangt, wodurch der Container gegen unbeabsichtigtes Herausgleiten aus der Haltevorrichtung 182, insbesondere beim Oeffnen des Lichtschutzschiebers 148, gesichert wird.

Im oberen Innenraum 184 zur Aufnahme der Kassette 30 befinden sich ebenfalls Federn 195, z.B. in Gestalt von Blattfedern, die selbsttätig die eingesetzte Kassette 30 nach unten drücken, um einen lichtdichten Kontakt zwischen der Kassette und dem Zwischenboden 185 der Haltevorrichtung 182 zu gewährleisten und die erwähnte Kupplung der Lichtschutzschieber 33 und 187 herbeizuführen. Unter dem Einfluss der Federn 195 wird ferner erreicht, dass die an der Kassette 30 angeordnete, quer zu ihrer Einschubrichtung verlaufende Rippe 173 selbsttätig in Eingriff mit einer entsprechenden Nut 196 an der Oberseite des Zwischenbodens 185 gelangt, wodurch die Kassette gegen unbeabsichtigtes Herausgleiten aus der Haltevorrichtung 182, insbesondere beim Oeffnen des Lichtschutzschiebers, gesichert wird. Ferner befinden sich im oberen Innenraum 184 zwei Taststifte 85 zum Zusammenarbeiten mit den Betätigungsorganen 81, 82 (Fig. 18) der Kassette 30.

Die Gebrauchsweise der beschriebenen Kassetten-Entladeeinrichtung 180 gemäss Fig. 28 ist wie folgt:

Es ist angenommen, dass der in den Zwischenboden 185 der Haltevorrichtung 182 eingelassene Lichtschutzschieber 187 sich in der Schliesslage befindet. Nun setzt der Photograph den Container 145 mit geschlossenem Lichtschutzschieber 148 in die Haltevorrichtung 182 ein, wie in Fig. 28 veranschaulicht ist. Dabei gelangt unter dem Einfluss der Federn 191 der untere Vorsprung 189 am Kupplungsstück 188 des im Zwischenboden 185 eingelassenen Lichtschutzschiebers 187 selbsttätig in Kupplungseingriff mit der zugeordneten Vertiefung 160 am Handgriff 161 des Lichtschutzschiebers 148 des Containers.

Eine zu entladende Kassette 30, die ein belichtetes Filmblatt enthält, wird in der aus Fig. 28 ersichtlichen Weise in den oberen Innenraum 184 der Haltevorrichtung 182 eingesetzt. Dabei gelangen die Taststifte 85 in Eingriff mit den Betätigungsorganen 81, 82 (Fig. 18) der Kassette, wobei die Druckfedern 91 gespannt und die Andrückplatte 52 von den sich noch in ihren wirksamen Lagen befindenden Rückhalteorganen 56 und 57 weg zurückgedrängt wird. Ferner gelangt unter dem Einfluss der Federn 195 der obere Vorsprung 190 am Kupplungsstück 188 des in den Zwischenboden 185 eingelassenen Lichtschutzschiebers 187 in Kupplungseingriff mit der zugeordneten Vertiefung 170 an der Griffleiste 34 des Lichtschutzschiebers 33 der Kassette 30, und schliesslich wird ebenfalls unter dem Einfluss der Federn 195 die Kassette 30 derart an die Oberseite des Zwischenbodens 185 gedrückt, dass der Fortsatz 47 des Verriegelungsorgans 45 (Fig. 7 bis 9) betätigt und dadurch der Lichtschutzschieber 33 der Kassette entriegelt wird.

Nachher bewegt der Photograph alle drei miteinander gekuppelten Lichtschutzschieber 33, 148 und 187 zusammen in ihre Offenlagen. Dabei werden die beweglichen Rückhalteorgane 56 und 57 der Kassette 30 freigegeben, wonach sie unter dem Einfluss der gespannten Federn 91 (Fig. 18) in ihre unwirksamen Lagen bewegt werden. Das belichtete Filmblatt fällt dann unter dem Einfluss der Schwerkraft aus der Kassette 30 durch die Durchbrechung 186 des Zwischenbodens 185 hindurch in den Container 145. Nachher bewegt der Photograph die gekuppelten Lichtschutzschieber in ihre Schliesslagen zurück, worauf die entladene Kassette 30 aus der Haltevorrichtung 182 herausgenommen und nachher mittels der Ladeeinrichtung 140 (Fig. 27) erneut mit einem unbelichteten Filmblatt geladen werden kann. Der Container 145 wird üblicherweise in der Haltevorrichtung 182 belassen, um mit weiteren belichteten Filmblättern aus Kassetten 30 auf die beschriebene Weise beschickt zu werden.

In jedem beliebigen Zeitpunkt kann der Photograph den Container 145 aus der Haltevorrichtung 182 herausnehmen, um nachher die in den Container eingefüllten belichteten Filmblätter zu entwickeln, sei es in einer üblichen Dunkelkammer oder mittels eines automatischen Entwicklungsgerätes. Das Ueberführen der belichteten Filmblätter aus dem Container 145 in ein Entwicklungsgerät kann bei vollem Umgebungslicht erfolgen, falls die Beschickungsöffnung des Entwicklungsgerätes einen Adapter zum lichtdichten Ansetzen oder Einsetzen des Containers aufweist. Der erwähnte Adapter kann z.B. ähnlich wie die Einrichtung 140 (Fig. 27) ausgebildet sein, mit dem einzigen Unterschied, dass die Ausgabeöffnung 153 der Separiervorrichtung 150 unmittelbar an die Beschickungsöffnung des Entwicklungsgerätes angeschlossen ist. Selbstverständlich sind aber auch andere Ausbildungsformen des Adapters möglich, insbesondere dann, wenn der ganze Stapel der belichteten Filmblätter auf einmal in die Beschickungsöffnung des Entwicklungsgerätes überführt werden darf. Der die belichteten Filmblätter enthaltende Container 145 kann auch zu einer entfernt liegenden Entwicklungsanstalt transportiert werden, die z.B. auf die Entwicklung von Farbfilmmaterial spezialisiert ist und die im Container enthalten Filmblätter für den Photographen entwickelt. Der Rücktransport der entwickelten Filmblätter kann ebenfalls mittels des Containers 145 erfolgen.

Bei einer nicht dargestellten Ausführungsvariante der Entladeeinrichtung nach Fig. 28 kann die Durchbrechung 186 des Zwischenbodens 185 unmittelbar und lichtdicht mit einer Eintrittsöffnung eines photographischen Entwicklungsgerätes
kommunizieren, so dass der Umweg über den Container 145 entbehrlich ist.

Die bereits erwähnte Nut 133 an einer der schmalen Längsseiten des Gehäuses 31 der Kassette 30 verleiht letzterer eine
unsymmetrische Gestalt. Mit Vorteil sind die Mündungen der
zum Einsetzen der Kassette 30 bestimmten Innenräume 143 und
184 der Lade-und Entladeeinrichtungen gemäss den Fig. 27 und
28 in Anpassung an die Nut 133 der Kassette 30 derart profiliert, dass ein verkehrtes Einsetzen der Kassette formschlüssig verhindert ist. Hierdurch werden Manipulationsfehler des Photographen oder seiner Hilfspersonen vermieden.

Die in den Fig. 29 bis 38 dargestellte zweite Ausführungsform einer photographischen Kassette 230 weist gemäss den
Fig. 29 bis 31 ein flaches Gehäuse 231 mit einer rechteckigen
Gehäuseöffnung 232 auf, die - wie beim ersten Beispiel -
sowohl den Durchtritt eines in die Kassette zu ladenden oder
aus der Kassette zu entnehmenden lichtempfindlichen Blattes
als auch den Lichtdurchtritt beim Belichten des Blattes während einer photographischen Aufnahme erlaubt. Der Gehäuseöffnung 232 ist ein im Gehäuse verschiebbar gelagerter Lichtschutzschieber 233 zugeordnet, der mit einer Griffleiste 234
zum Betätigen des Lichtschutzschiebers versehen ist. An der
von der Griffleiste 234 abgewandten Endpartie des Lichtschutzschiebers 233 ist mindestens ein Anschlagzapfen 235 (Fig. 29)
angeordnet, der in die Gehäuseöffnung 232 hineinragt und ein
gänzliches Abziehen des Lichtschutzschiebers 233 vom Gehäuse
231 verhindert.

Im Gehäuse 231 befindet sich eine Andrückplatte 252 (Fig. 29,
32A, 32B, 33, 35, 38A, 38B), deren der Gehäuseöffnung 232 zugewandte Vorderseite eine Stützfläche 253 für das in die Kassette eingelegte lichtempfindliche Blatt bildet. Die Andrückplatte 252 steht unter dem Einfluss einer wellenförmig gebogenen Blattfeder 255, welche die Andrückplatte in Richtung
gegen die Gehäuseöffnung 232 drängt. Zwischen der Gehäuseöffnung 232 und der Andrückplatte 252 befinden sich Rückhalteorgane 256 und 257 (Fig. 29, 32B, 33 bis 37), die dazu
bestimmt sind, Randpartien der lichtempfindlichen Schicht des
in die Kassette geladenen lichtempfindlichen Blattes zu
übergreifen, derart dass dieses Blatt zwischen den Rückhalteorganen 256 und 257 einerseits und der Stützfläche 253
der Andrückplatte 252 anderseits unter dem Einfluss der
Blattfeder 255 festklemmbar ist, um eine plane Lage des
Blattes an der Andrückplatte 252 zu erzielen. Damit jedoch
beim Laden und Entladen der Kassette 230 das lichtempfindliche Blatt in Richtung senkrecht zu seiner Ebene durch die Gehäuseöffnung 232 hindurchtreten kann, sind die genannten
Rückhalteorgane 256 und 257 aus ihren wirksamen Lagen in unwirksame Lagen ausserhalb des Bewegungsweges des Blattes,
d.h. ausserhalb der Konturen der Gehäuseöffnung 232, bewegbar, und zwar ausschliesslich in zur Stützfläche 253 der
Andrückplatte 252 parallelen Richtungen.

Die mit 256 bezeichneten Rückhalteorgane sind flache Leisten, die parallel zum Bewegungsweg des Lichtschutzschiebers
.233 verlaufend bei den einander gegenüberliegenden Längsrandkanten der Gehäuseöffnung 232 angeordnet sind, wie insbesondere die Fig. 29, 36 und 37 zeigen. Das mit 257 bezeichnete dritte Rückhalteorgan ist eine Leiste, die entlang
der von der Griffleiste 234 des Lichtschutzschiebers 233 entfernteren Querrandkante der Gehäuseöffnung 232 und somit
rechtwinklig zum Bewegungsweg des Lichtschutzschiebers verläuft.

Jedes der den Längsrandkanten der Gehäuseöffnung 232 zugeordneten Rückhalteorgane 256 weist zwei Führungszapfen 260 und
261 auf (Fig. 35 bis 37, 38A, 38B), die je in eine im Gehäuse 231 ausgebildete Führungsnut 262 bzw. 263 (Fig. 38A, 38B) eingreifen. Diese Führungsnuten 262 und 263 haben je
einen in bezug auf die Längsrichtung des betreffenden Rückhalteorgans 256 schrägen Verlauf, so dass die Bewegungen
dieses Rückhalteorgans 256 zwangsläufig jeweils eine Bewegungskomponente in Längsrichtung und eine Bewegungskomponente in Querrichtung aufweisen. Fig. 36 zeigt eines der
Rückhalteorgane 256 in seiner wirksamen Lage, während in
Fig. 37 das gleiche Rückhalteorgan 256 in seiner unwirksamen Lage dargestellt ist. Durch Ausüben einer Kraft in der
Längsrichtung des Rückhalteorgans 256 nach oben in Fig. 36
wird diesem Rückhalteorgan nicht nur eine Bewegungskomponente nach oben, sondern gleichzeitig auch eine quergerichtete Bewegungskomponente in Richtung von dem gegenüberliegenden Rückhalteorgan 256 weg erteilt, wodurch es in seine
unwirksame Lage gemäss Fig. 37 gelangt. Wenn umgekehrt auf
das Rückhalteorgan 256 eine Kraft in seiner Längsrichtung
nach unten in Fig. 37 ausgeübt wird, bewegt sich das Rückhalteorgan nicht nur nach unten, sondern gleichzeitig auch
in Querrichtung, wobei es in seine wirksame Lage gemäss
Fig. 36 gelangt.

Für den Bewegungsantrieb der Rückhalteorgane 256 sind die
nachstehend beschriebenen Mechanismen vorhanden, von denen
der Einfachheit wegen nur einer in den Fig. 35 bis 37 dargestellt ist. Der Mechanismus für den Bewegungsantrieb des
gegenüberliegenden Rückhalteorgans 256 ist spiegelbildlich
gleich ausgebildet. Parallel zur Längsrichtung jedes Rückhalteorgans 256 erstreckt sich ein stabförmiger Stössel
281, der längsverschiebbar im Gehäuse 231 geführt und durch
eine zugeordnete Bohrung 280 (Fig. 31, 35 bis 37) hindurch
von aussen betätigbar ist. Die Mündungen der Bohrungen 280
sind an der von der Griffleiste 234 des Lichtschutzschiebers
233 abgewandten Stirnendfläche 284 des Gehäuses 231 angeordnet. Das von der Stirnendfläche 284 abgewandte Ende jedes Stössels 281 ist mit einem Kopfstück 282 verbunden, das in
einer Ausnehmung 283 des Gehäuses 231 verschiebbar geführt
ist, wie die Fig. 35 bis 37 zeigen. Der Stössel 281 trägt
ein auf ihm festsitzendes Gleitstück 285, dessen Zweck noch
erläutert werden wird. Das Kopfstück 282 weist eine parallel
zur Längsrichtung des benachbarten Rückhalteorgans 256 verlaufende, ebene Führungsfläche 288 auf, die zum Zusammenarbeiten mit einem am Rückhalteorgan 256 fest angeordneten
Steuerstift 289 bestimmt ist. Ferner weist das Kopfstück 282
eine schräg verlaufende Führungsnut 290 auf, in welche der
Steuerstift 289 eintreten kann, wobei die zueinander parallelen Flanken der Führungsnut 290 schräge Gleitflächen zum Zusammenarbeiten mit dem Führungsstift 289 bilden. Eine Druckfeder 291 ist zwischen dem bereits erwähnten Gleitstück 285
und einem Innenvorsprung 292 des Gehäuses 231 eingeschaltet.
Diese Druckfeder 291 ist bestrebt, den Stössel 281 zusammen
mit den damit verbundenen Teilen 282 und 285 in Richtung gegen die Stirnendfläche 284 des Gehäuses 231 zu bewegen, bis
das Kopfstück 282 am Innenvorsprung 292 oder das Gleitstück
285 an einer Anschlagfläche 293 des Gehäuses anschlägt. Bei
der hierbei resultierenden Ruhestellung der miteinander gekuppelten Teile 281, 282 und 285 liegt die Führungsfläche
288 des Kopfstückes 282 am Steuerstift 289 des betreffenden Rückhalteorgans 256 an, wodurch letzteres in seiner
wirksamen Lage gesperrt wird.

Wenn man den Stössel 281 entgegen dem Einfluss der Druckfeder
291 gemäss dem Pfeil 294 in Fig. 37 verschiebt, wird das
Kopfstück 282 in den Fig. 36 und 37 nach oben bewegt, wobei
der Steuerstift 289 des Rückhalteorgans 256 durch die Mündung der schrägen Führungsnut 290 erfasst wird und anschliessend in diese Führungsnut gleitet, wie Fig. 37 zeigt. Dies
hat eine Bewegung des Rückhalteorgans 256 aus seiner wirksamen Lage in seine unwirksame Lage zur Folge. Wenn man die auf den Stössel 281 gemäss dem Pfeil 294 ausgeübte Kraft wegnimmt, drückt die Druckfeder 291 den Stössel in seine Ruhelage gemäss Fig. 36 zurück, wobei durch Zusammenarbeiten der schrägen Führungsnut 290 des Kopfstückes 282 mit dem Steuerstift 289 das Rückhalteorgan 256 wieder in seiner wirksamen Lage gesperrt wird.

Das bereits erwähnte Gleitstück 285, das mit dem Stössel 281 fest verbunden ist, weist gemäss den Fig. 35 bis 37 einen seitlichen Fortsatz 295 auf, der mit einer schrägen Gleitfläche 296 versehen ist. Letztere ist dazu bestimmt, mit einem seitlich vorspringenden Lappen 297 der Andrückplatte 252 zusammenzuarbeiten, wenn der Stössel bewegt wird. Verschiebt man den Stössel 281 entgegen dem Einfluss der Druckfeder 291, so fährt die schräge Gleitfläche 296 des Gleitstückfortsatzes 295 gegen den Lappen 297, wodurch der Andrückplatte 252 sowohl eine Bewegungskomponente in zum Bewegungsweg des Stössels 281 und des Lichtschutzschiebers 233 paralleler Richtung als auch eine Bewegungskomponente in Richtung von der Gehäuseöffnung 232 weg, d.h. in Fig. 35 nach links, erteilt wird. Die erstgenannte Bewegungskomponente hat zur Folge, dass das näher bei der Griffleiste 234 des Lichtschutzschiebers 233 liegende Ende 298 (Fig. 32A) der Andrückplatte 252 in Eingriff mit einer stationären schrägen Gleitfläche 299 im Innern des Gehäuses 231 gelangt, wodurch auch die an das Ende 298 angrenzende Partie der Andrückplatte 252 eine Bewegungskomponente in Richtung von der Gehäuseöffnung 232 weg erfährt, wie in den Fig. 32A und 35 mit strichpunktierten Linien 252' angedeutet ist.

Somit wird jeweils beim Betätigen der beiden Stössel 281 (gemäss dem Pfeil 294 in Fig. 37) die Andrückplatte 252 entgegen dem Einfluss der Blattfeder 255 von der Gehäuseöffnung 232 und von den Rückhalteorganen 256 und 257 weg zurückgedrängt, und zwar jeweils bevor die Rückhalteorgane aus ihren wirksamen Lagen in ihre unwirksamen Lagen bewegt werden. Umgekehrt wird beim Wegnehmen der auf die Stössel 281 ausgeübten Kräfte die Andrückplatte 252 mittels des Gleitstückfortsatzes 295 jedes Stössels und mittels der stationären schrägen Gleitfläche 299 solange in der zurückgedrängten Lage gehalten, bis mittels der Kopfstücke 282 die Rückhalteorgane 256 in ihre wirksamen Lagen bewegt worden sind. Erst wenn die Stössel 281 ihre Ruhestellungen einnehmen, erlauben die Gleitstückfortsätze 295, dass die Andrückplatte 252 unter dem Einfluss der Blattfeder 255 gegen die sich in wirksamen Lagen befindlichen Rückhalteorgane 256 bewegt wird. Dabei gleitet das Ende 298 der Andrückplatte 252 über die stationäre schräge Gleitfläche 299 (Fig. 32A), wodurch die Andrückplatte auch eine Bewegungskomponente in Richtung von der Griffleiste 234 des Lichtschutzschiebers 233 weg erfährt.

Die der Andrückplatte 252 zugeordnete, wellenförmig gebogene Blattfeder 255 dient weiter dazu, das dritte Rückhalteorgan 257 in seine unwirksame Lage und in seine wirksame Lage zu bewegen, wenn die beiden Stössel 281 gemäss dem Pfeil 294 in Fig. 37 betätigt bzw. freigegeben werden. Zu diesem Zweck ist die näher bei der Griffleiste 234 des Lichtschutzschiebers 233 liegende Endpartie 301 der Blattfeder 255 z.B. mittels einer Schraube 302 (Fig. 32A und 38A) am Gehäuse 231 befestigt, während die entgegengesetzte Endpartie 303 der Blattfeder 255 gemäss den Fig. 32B und 33 mit einem das dritte Rückhalteorgan 257 tragenden Gleitstück 304 verbunden ist. In der Nähe der zuletzt erwähnten Endpartie 303 weist die Blattfeder 255 zwei Führungsschlitze 305 auf (Fig. 32B, 33, 38B), durch welche je ein am Gehäuse 231 befestigter Führungsbolzen 306 hindurchgeht. Die Führungsschlitze 305 der Blattfeder 255 verlaufen parallel zu den Längsrandkanten der Gehäuseöffnung 232. Das Gleitstück 304, welches das dritte Rückhalteorgan 257 trägt, ist durch Führungskufen 307 (Fig. 32B, 33, 34, 38B) geführt, die im Gehäuse 231 stationär angeordnet sind und je einen als Anschlag dienenden Vorsprung 308 zum Festlegen der wirksamen Lage des Rückhalteorgans 257 aufweisen.

Es leuchtet ein, dass jeweils beim Zurückdrängen der Andrückplatte 252 entgegen dem Einfluss der wellenförmig gebogenen Blattfeder 255 die letztere eine Streckung erfährt, weil dann ihre Wellen abgeflacht und weitgehend platt gedrückt werden, wie man aus Fig. 33 erkennen kann. Weil die eine Endpartie 301 der Blattfeder 255 am Gehäuse 231 befestigt ist, hat die erwähnte Streckung der Blattfeder eine Bewegung ihrer anderen Endpartie 303 in Richtung gegen die Stirnendfläche 284 des Gehäuses 231 zur Folge, wodurch mittels des Gleitstückes 304 das Rückhalteorgan 257 aus seiner wirksamen Lage gemäss Fig. 32B in eine unwirksame Lage gemäss Fig. 33 bewegt wird. Wenn nachher der Andrückplatte 252 gestattet wird, sich in Richtung gegen die Gehäuseöffnung 232 zurückzubewegen, nimmt die Blattfeder 255 unter dem Einfluss ihrer eigenen Elastizität wieder ihre ursprüngliche Wellenform an, wodurch mittels des Gleitstückes 304 das dritte Rückhalteorgan 257 in seine wirksame Lage gemäss Fig. 32B zurückbewegt und schliesslich die Andrückplatte 252 gegen die bereits in ihre wirksamen Lagen bewegten Rückhalteorgane 256 und 257 gedrückt wird.

Gemäss den Fig. 32B und 33 weist das das dritte Rückhalteorgan 257 tragende Gleitstück 304 eine Anschlagfläche 401 auf, die quer zur Bewegungsrichtung dieses Rückhalteorgans verläuft und dazu bestimmt ist, ein durch die Gehäuseöffnung 232 in die Kassette 230 eingelegtes lichtempfindliches Blatt entlang der Stützfläche 253 der noch etwas zurückgedrängten Andrückplatte 252 in Richtung von der Stirnendfläche 284 des Gehäuses 231 weg zu verschieben, wenn das Rückhalteorgan 257 aus seiner unwirksamen Lage gemäss Fig. 33
in die wirksame Lage gemäss Fig. 32B bewegt wird. Bei dieser
Verschiebung des lichtempfindlichen Blattes in bezug auf die
Konturen der Gehäuseöffnung 232 wird die näher bei der Griffleiste 234 des Lichtschutzschiebers 233 liegende Randkante
des Blattes unter die dortige Querrandkante der Gehäuseöffnung 232 geschoben, wobei das lichtempfindliche Blatt ein
Fühlerorgan 110 (Fig. 32A) betätigt, welches wie bei der
zuerst beschriebenen Kassette 130 ein Anzeigeorgan 112 für
den Ladezustand der Kassette 230 steuert.

Die übrige Ausbildung der Kassette 230 ist im wesentlichen
gleich wie beim ersten Ausführungsbeispiel und wie mit Bezug auf die Fig. 4 bis 9 und 23 bis 26 beschrieben. Auch die
Gebrauchsweise der Kassette 230 ist gleich wie jene der zuerst beschriebenen Kassette 130, wobei zum Laden und Entladen
der Kassette 230 ebenfalls eine Ladeeinrichtung 140 gemäss
Fig. 27 bzw. eine Entladeeinrichtung 180 gemäss Fig. 28 benutzt werden kann.

Bezüglich der Wirkungsweise ist zu bemerken, dass die beweglichen Rückhalteorgane 256 und 257 der Kassette 230 beim
Betätigen der Stössel 281 auch dann in ihre unwirksamen
Lagen bewegt werden, wenn der Lichtschutzschieber 233 noch
seine Schliesslage einnimmt, wogegen bei der zuerst beschriebenen Kassette 130 nach dem Betätigen der Stössel 81
die Rückhalteorgane 56 und 57 jeweils in ihren wirksamen
Lagen verharren, solange der Lichtschutzschieber 33 geschlossen ist, und erst beim gänzlichen Oeffnen des Lichtschutzschiebers 33 unter dem Einfluss der Druckfedern 91 ihre unwirksamen Lagen einnehmen. Dieser funktionelle Unterschied
ist für die praktische Verwendung der Kassetten 130 und 230
ohne Bedeutung. In beiden Fällen wird beim Betätigen der
Stössel 81 bzw. 281 jeweils zuerst die Andrückplatte 52 bzw.
252 entgegen dem Einfluss der Blattfedern 55 bzw. der Blattfeder 255 von den sich in ihren wirksamen Lagen befindlichen Rückhalteorganen 56 und 57 bzw. 256 und 257 weggedrängt, bevor die Rückhalteorgane in ihre unwirksamen Lagen bewegt werden, und umgekehrt werden beim Freigeben der Stössel 81 bzw. 281 jeweils zuerst die Rückhalteorgane aus ihren unwirksamen Lagen in die wirksamen Lagen bewegt, bevor die Andrückplatte 52 bzw. 252 durch die Blattfedern 55 bzw. die Blattfeder 255 gegen die Rückhalteorgane gedrückt wird. Die Bewegung der Rückhalteorgane 56 und 57 bzw. 256 und 257 erfolgt also immer in unbelastetem Zustand.

Die Position der lichtempfindlichen Schicht des in die Kassette 30 oder 230 geladenen Filmblattes ist durch die in ihre wirksamen Lagen bewegten Rückhalteorgane 56, 57 bzw. 256 und 257 definiert, wenn die Andrückplatte 52 bzw. 252 unter dem Einfluss der Blattfeder 55 bzw. der Blattfeder 255 das Filmblatt an die Rückhalteorgane andrückt. Unterschiedliche Dicken der verwendeten Filmblätter haben somit keinen Einfluss auf die Position der lichtempfindlichen Schicht und auf die Abbildungsschärfe der unter Verwendung dieser Kassetten erzeugten Photographien.

In den Fig. 39 bis 44 ist als drittes Ausführungsbeispiel der erfindungsgemässen Kassette eine vorteilhafte Weiterbildung der mit Bezug auf die Fig. 29 bis 38 beschriebenen zweiten Ausführungsform dargestellt, wobei übereinstimmende Teile mit den gleichen Bezugszeichen wie in den Fig. 29 bis 38 bezeichnet sind. Im folgenden sind nur die Unterschiede zum zweiten Ausführungsbeispiel beschrieben.

Die Kassette 330 gemäss den Fig. 39 bis 44 weist einen Lichtschutzschieber 333 auf, der an seiner in Schliesslage dem Innenraum des Gehäuses 331 zugekehrten Seite mit zwei vorspringenden Rippen oder Kufen 402 versehen ist. Diese Kufen 402 verlaufen parallel zum Bewegungsweg des Lichtschutzschiebers 333 und erstrecken sich von der Griffleiste 234 desselben bis nahe zum gegenüberliegenden Ende des Lichtschutzschiebers. Die Fig. 39 und 41, und noch deutlicher
die Fig. 43 und 44, zeigen, dass die Kufen 402 je in einem
verhältnismässig geringen Abstand von der einen bzw. andern
Längskante des Lichtschutzschiebers 333 verlaufen, und zwar
so, dass bei geschlossenem Lichtschutzschieber die Kufen
402 von den seitlichen Rückhalteorganen 256 gerade noch
nicht berührt werden, wenn die letzteren sich in ihren wirksamen Lagen gemäss den Fig. 39 und 44 befinden. Die Höhe der
Kufen 402, senkrecht zur ebenen Innenseite des Lichtschutzschiebers 333 gemessen, ist derart begrenzt, dass die Kufen
402 bei geschlossenem Lichtschutzschieber 333 ein in die
Kassette 330 geladenes lichtempfindliches Blatt 403 gerade
noch nicht berühren, wenn letzteres mittels der Andrückplatte 252 unter dem Einfluss der Andrückfeder 255 an die in
ihre wirksamen Lagen gebrachten Rückhalteorgane 256 angedrückt wird, wie in der rechten Hälfte von Fig. 44 gezeigt
ist. Gemäss Fig. 42 weist jede Kufe 402 an ihrem von der
Griffleiste 234 des Lichtschutzschiebers 333 abgewandten Ende eine schräg ansteigende Rampe 404 auf. Es versteht sich,
dass die für den Durchtritt des Lichtschutzschiebers 333 erforderliche Ausnehmung 405 (Fig. 41) in der der Griffleiste
234 zugewandten Endpartie des Gehäuses 331 dem Profil des
Lichtschutzschiebers 333 und der Kufen 402 angepasst ist, um
dort einen Lichteintritt in den Innenraum des Gehäuses 331 zu
verhüten.

In Fig. 39 ist ersichtlich, dass der Lichtschutzschieber 333
an seinem von der Griffleiste 234 entfernten Ende eine Endkante 406, 407 aufweist, die nicht in einem Zuge geradlinig
verläuft. Nur eine Mittelpartie 406 der genannten Endkante
verläuft rechtwinklig zum Bewegungsweg des Lichtschutzschiebers 333, während daran anschliessende Aussenpartien 407 der
Endkante je einen schrägen Verlauf haben, derart dass die
äussersten Enden 408 der Endkante 406, 407 je einen etwas
geringeren Abstand von der Griffleiste 234 haben als die Mittelpartie 406. In Uebereinstimmung mit der beschriebenen
Gestaltung der Endkante 406, 407 des Lichtschutzschiebers 333
ist die in Fig. 39 mit gestrichelten Linien angedeutete Ausnehmung 409 im Gehäuse 331 geformt, in welche die von der
Griffleiste 234 entfernte Endpartie des Lichtschutzschiebers
333 in der Schliesslage desselben einzugreifen hat, damit an
dieser Stelle ein Lichteinfall in den Innenraum des Gehäuses
331 bei geschlossenem Lichtschutzschieber sicher verhütet ist.

Die beschriebenen Merkmale des dritten Ausführungsbeispiels
gemäss den Fig. 39 bis 44 bieten gegenüber den zuvor beschriebenen ersten und zweiten Ausführungsbeispielen den
Vorteil, dass auch nicht plane lichtempfindliche Blätter
sicher und einwandfrei in die Kassette 330 geladen werden
können, insbesondere mit Hilfe einer halbautomatischen Einrichtung gemäss Fig. 27. In der Praxis hat sich nämlich gezeugt, dass z.B. sogenannte Planfilme die Tendenz haben, sich
nach der Seite ihrer lichtempfindlichen Schicht konkav zu wölben, und zwar um eine gedachte Achse, die parallel zu den längeren Randkanten der rechteckigen Blätter verläuft. Diese bei
allen Formaten und Fabrikaten der lichtempfindlichen Blätter
mehr oder weniger beobachtete Erscheinung hat zur Folge, dass
ein bei geöffnetem Lichtschutzschieber in die Kassette zu ladendes lichtempfindliches Blatt 403, wie in der linken Hälfte
von Fig. 43 dargestellt, zunächst nur mit der Mittelpartie
seiner von der lichtempfindlichen Schicht abgekehrten Rückseite auf der Andrückplatte 252 aufliegt, während die Längsrandpartien des Blattes 403 noch aus dem Innenraum des Gehäuses 331 herausragen, selbst wenn die Andrückplatte 252 entgegen dem Einfluss der Andrückfeder 255 zurückgedrängt ist
durch Betätigen der Stössel 281, wie mit Bezug auf das zweite Ausführungsbeispiel gemäss den Fig. 29 bis 38 erläutert
wurde.

Wenn nun aber der Lichtschutzschieber 333 der zuletzt beschriebenen Kassette 330 von seiner Offenlage in die Schliesslage bewegt wird, fährt zunächst die Mittelpartie 406 der voranlaufenden Endkante 406, 407 des Lichtschutzschiebers zwischen die aufkragenden seitlichen Randpartien des Blattes
403, wonach diese Randpartien mittels der schräg verlaufenden Aussenpartien 407 der Endkante 406, 407 etwa nach Art
eines Schneepfluges auswärts und gegen die Andrückplatte 252
gedrängt werden, bis die gesamte Endkante 406, 407 über das
Blatt 403 hinweg gleiten kann. Unmittelbar anschliessend gelangen die schräg ansteigenden Rampen 404 und die Kufen 402
in Berührung mit der konkaven Seite des Blattes 403, wobei
letzteres durch die Kufen 402 weiter flachgedrückt wird, wie
in der linken Hälfte von Fig. 43 mit einer strichpunktierten
Linie 403' angedeutet und in der rechten Hälfte der genannten Fig. 43 mit voll ausgezogener Linie dargestellt ist. Beim
Schliessen des Lichtschutzschiebers 333 werden also die Längskanten des Blattes 403 je in eine solche Position gezwungen,
dass nachher die seitlichen Rückhalteorgane 256, wie auch das
dritte Rückhalteorgan 257 (Fig. 39), imstande sind, die benachbarten Randpartien des Blattes 403 zu übergreifen, wenn
die Rückhalteorgane 256 und 257 in ihre wirksamen Lagen gemäss den Fig. 39 und 44 zurückbewegt werden.

In der linken Hälfte von Fig. 44 ist eine Zwischenphase während der Bewegung des Stössels 281 von seiner aktiven Lage
zurück in seine inaktive Lage dargestellt: Die seitlichen
Rückhalteorgane 256 befinden sich bereits in ihren wirksamen
Lagen, bei denen sie die benachbarten Randpartien des in die
Kassette eingelegten Blattes 403 übergreifen, während die
Andrückplatte 252 mittels des Fortsatzes 295 des mit dem Stössel verbundenen Gleitstückes 285 noch entgegen dem Einfluss
der Andrückfeder 255 zurückgedrängt ist. Die rechte Hälfte der
Fig. 44 zeigt schliesslich die Endphase der geladenen Kassette: Der Stössel 281 und das mit ihm verbundene Gleitstück 285
befinden sich in der inaktiven Ruhelage, bei welcher der
Fortsatz 295 des Gleitstückes 285 die Andrückplatte 252 freigegeben hat, so dass die letztere unter dem Einfluss der Andrückfeder 255 Randpartien des lichtempfindlichen Blattes
403 an die Rückhalteorgane 256 und 257 presst und hierdurch
die lichtempfindliche Fläche des Blattes 403 in einer vorbestimmten, durch die Rückhalteorgane 256 und 257 definierten
Ebene praktisch vollkommen plan gehalten wird.

Wie erwähnt, kann zum halbautomatischen Laden der zuletzt beschriebenen Kassette 330 mit Vorteil die Einrichtung 140 gemäss Fig. 27 benutzt werden, wobei beim Einsetzen der Kassette in die Haltevorrichtung 142 die beiden Stössel 281 mittels
der stationären Taststifte 85 automatisch in ihre aktiven Lagen bewegt und hierdurch die Andrückplatte 252 entgegen dem
Einfluss der Andrückfeder 255 zurückgedrängt und die Rückhalteorgane 256 und 257 in ihre unwirksamen Lagen gemäss
Fig. 43 gebracht werden. Beim Herausnehmen der geladenen Kassette aus der Haltevorrichtung 142 kehren die Stössel 281
unter dem Einfluss der ihnen zugeordneten Druckfedern 291
(Fig. 35 und 37) selbsttätig in ihre inaktive Ruhelage zurück, wobei die Rückhalteorgane 256 und 257 ihre wirksamen
Lagen gemäss Fig. 44 einnehmen und die Andrückplatte 252 zum
Anpressen von Randpartien des geladenen Blattes 403 an die
Rückhalteorgane 256 und 257 freigegeben wird.

Patentansprüche

1. Photographische Kassette zum Handhaben und Belichten eines lichtempfindlichen Blattes, insbesondere zur Verwendung an einer Grossformatkamera, mit einem flachen Gehäuse (31; 231; 331) zum Einlegen des lichtempfindlichen Blattes, mit einem am Gehäuse beweglich angeordneten Lichtschutzschieber (33; 233; 333) zum Freigeben oder lichtdichten Verschliessen einer Gehäuseöffnung (32; 232), die bezüglich Form und Grösse der lichtempfindlichen Fläche des Blattes angepasst ist und sowohl den Lichtdurchtritt beim Belichten des Blattes als auch den Durchtritt des Blattes beim Laden und Entladen der Kassette gestattet, mit einer im Gehäuse (31; 231; 331) angeordneten Stützfläche (53; 253) zum Abstützen der von der lichtempfindlichen Schicht abgewandten Rückseite des in das Gehäuse (31; 231; 331) eingelegten Blattes und mit ebenfalls im Gehäuse angeordneten Rückhalteorganen (56, 57; 256; 257) zum Uebergreifen von Randpartien der lichtempfindlichen Vorderseite des in das Gehäuse eingelegten Blattes, welche Rückhalteorgane (56, 57; 256; 257) mindestens zum Teil beweglich ausgebildet und zum Laden und Entladen der Kassette aus ihren wirksamen Lagen in unwirksame Lagen ausserhalb des vom lichtempfindlichen Blatt benötigten Bewegungsweges bringbar sind, und mit mindestens einem am Gehäuse (31; 231; 331) der Kassette von aussen zugänglichen Betätigungsorgan (81; 281), das mit den Rückhalteorganen (56, 57; 256, 257) in Wirkungsverbindung steht und zwischen einer inaktiven Lage, bei welcher dir Rückhalteorgane (56, 57; 256, 257) sich in ihren wirksamen Lagen befinden, und einer aktiven Lage, bei welcher die Rückhalteorgane in ihre unwirksamen Lagen gebracht sind, bewegbar ist, dadurch gekennzeichnet, dass die Stützfläche (53; 253) an einer Andrückplatte (52; 252) vorhanden ist, die unter dem Einfluss mindestens einer zugeordneten Andrückfeder (55; 255) steht, die bestrebt ist, die Andrückplatte
(52; 252) in Richtung gegen die Gehäuseöffnung (32; 232)
zu bewegen, um ein in das Gehäuse (31; 231) eingelegtes lichtempfindliches Blatt zwischen der Stützfläche (53; 253) der Andrückplatte (52; 252) einerseits und den in ihre wirksamen Lagen gebrachten Rückhalteorganen (56, 57; 256, 257) anderseits
festzuklemmen, und dass das zum Bewegen der Rückhalteorgane
(56, 57; 256, 257) vorgesehene Betätigungsorgan (81; 281) zusätzlich mit einem mit der Andrückplatte (52; 252) zusammenarbeitenden Steuerteil (95; 295) verbunden ist, derart dass
jede Bewegung des Betätigungsorgans (81; 281) in seine aktive
Lage auch ein Zurückdrängen der Andrückplatte (52; 252) entgegen dem Einfluss der Andrückfeder (55; 255) zur Folge hat,
um zwischen der Stützfläche (53; 253) der Andrückplatte (52;
252) und den Rückhalteorganen (56, 57; 256, 257) einen freien
Abstand zu schaffen.

2. Kassette nach Anspruch 1, dadurch gekennzeichnet,
dass Mittel (65, 69; 288, 289) vorhanden sind, welche beim
Bewegen des Betätigungsorgans (81; 281) in seine aktive Lage
die Rückhalteorgane (56, 57; 256, 257) mindestens so lange
daran hindern, ihre unwirksamen Lagen einzunehmen, bis die
Andrückplatte (52; 252) entgegen dem Einfluss der Andrückfeder
(55; 255) zurückgedrängt ist, und welche Mittel (65, 69; 288,
289) beim Bewegen des Betätigungsorgans (81; 281) in seine
inaktive Lage die Andrückplatte (52; 252) so lange in ihrer
zurückgedrängten Lage halten, bis die Rückhalteorgane (56,
57; 256, 257) in ihre wirksamen Lagen gebracht sind.

3. Kassette nach Anspruch 1 oder 2, dadurch gekennzeichnet, dass das Betätigungsorgan (81; 281) unter dem Einfluss
einer zugeordneten Feder (91; 291) steht, die bestrebt ist,
das Betätigungsorgan (81; 281) in seine aktive Lage zu bewegen und hierdurch die Rückhalteorgane (56, 57; 256, 257) in
ihre wirksamen Lagen zu bringen und die Andrückplatte (52;
252) freizugeben für ihre Bewegung unter dem Einfluss der Andrückfeder (55; 255).

4. Kassette nach Anspruch 3, dadurch gekennzeichnet, dass das Betätigungsorgan (81; 281) in einer Ausnehmung (80; 280) des Gehäuses (31; 231) versenkt angeordnet und zum Bewegungsweg des Lichtschutzschiebers (33; 233) parallel verschiebbar gelagert ist.

5. Kassette nach einem der Ansprüche 1 bis 4, dadurch gekennzeichnet, dass von den beweglichen Rückhalteorganen (56, 57; 256, 257) zwei (56; 256) die Gestalt von Leisten haben, die parallel zum Bewegungsweg des Lichtschutzschiebers (33; 233) verlaufen und bei einander gegenüberliegenden Längsrandkanten der Gehäuseöffnung (32; 232) angeordnet sind, dass jedes dieser Rückhalteorgane (56; 256) durch Führungsorgane (60-63; 260-263) zwangsläufig derart geführt ist, dass seine Bewegung in die unwirksame Lage jeweils eine Bewegungskomponente in Längsrichtung und eine Bewegungskomponente in Querrichtung von dem gegenüberliegenden Rückhalteorgan (56; 256) weg aufweist, und dass das Betätigungsorgan (81; 281) mit einem Steuerglied (82; 282) verbunden ist, das mindestens eine schräge Gleitfläche (90; 290) zum Zusammenarbeiten mit einem an dem einen bzw. andern dieser Rückhalteorgane (56; 256) angeordneten Steuerglied (89; 289) aufweist, um dem betreffenden Rückhalteorgan (56) die zwei genannten Bewegungskomponenten zu erteilen.

6. Kassette nach Anspruch 5, dadurch gekennzeichnet, dass jedem der parallel zum Bewegungsweg des Lichtschutzschiebers (33; 233) verlaufenden Rückhalteorgane (56; 256) ein eigenes Betätigungsorgan (81; 281) zugeordnet ist.

7. Kassette nach einem der Ansprüche 1 bis 6, dadurch gekennzeichnet, dass der mit der Andrückplatte (52; 252) zusammenarbeitende Steuerteil (95; 295) eine schräge Gleitfläche (96; 296) aufweist, die in Zusammenarbeit mit der Andrückplatte (52) sowohl das Zurückdrängen der angrenzenden Partie der Andrückplatte (52; 252) entgegen dem Einfluss der Andrückfeder (55; 255) als auch eine Verschiebung der Andrückplatte (52; 252) in zum Bewegungsweg des Lichtschutzschiebers (33; 233) paralleler Richtung zur Folge hat, wenn das Betätigungsorgan (81; 281) in seine aktive Lage bewegt wird, und dass im Gehäuse (31; 231) mindestens eine stationäre schräge Gleitfläche (99; 299) zum Zusammenarbeiten mit einer vom Steuerteil (95; 295) entfernten Partie (98; 298) der Andrückplatte (52; 252) vorhanden ist, so dass die Verschiebung der Andrückplatte (52; 252) jeweils auch ein Zurückdrängen der entfernten Partie (98; 298) der Andrückplatte (52; 252) entgegen dem Einfluss der Andrückfeder (55; 255) zur Folge hat.

8. Kassette nach Anspruch 2, dadurch gekennzeichnet, dass das Betätigungsorgan (81) mit den beweglichen Rückhalteorganen (56, 57) unter Zwischenschaltung einer Feder (91) kraftschlüssig in Wirkungsverbindung steht, und dass mindestens ein mit dem Lichtschutzschieber (33) zusammenarbeitendes Sperrorgan (65) vorhanden ist, das selbst bei in seine aktive Lage bewegbarem Betätigungsorgan (81) die Rückhalteorgane (56, 57) formschlüssig in ihre wirksamen Lagen zwingt und gegen Bewegung in ihre unwirksamen Lagen formschlüssig sperrt, wenn der Lichtschutzschieber (33) nicht in eine die Gehäuseöffnung (32) freigebende Offenlage bewegt ist.

9. Kassette nach Anspruch 5, dadurch gekennzeichnet, dass von den beweglichen Rückhalteorganen (56, 57) ein drittes (57) die Gestalt einer Leiste hat, die rechtwinklig zum Bewegungsweg des Lichtschutzschiebers (33) verläuft und bei der vom Betätigungsende (34) des Lichtschutzschiebers (33) entfernteren Querrandkante der Gehäuseöffnung (32) angeordnet ist, dass das dritte Rückhalteorgan (57) durch schwenkbare Hebel (71) mit den zwei parallel zum Bewegungsweg des Lichtschutzschiebers (33) verlaufenden Rückhalteorganen (56) in Wirkungsverbindung steht, derart dass jede in Längsrichtung erfolgende Bewegungskomponente der letztgenannten Rückhalteorgane (56) zwangsläufig eine entgegengesetzte Bewegung des dritten Rückhalteorgans (57) zur Folge hat.

10. Kassette nach Anspruch 5, dadurch gekennzeichnet, dass von den beweglichen Rückhalteorganen (256, 257) ein drittes (257) die Gestalt einer Leiste hat, die rechtwinklig zum Bewegungsweg des Lichtschutzschiebers (233) verläuft und bei der vom Betätigungsende (234) des Lichtschutzschiebers (233) entfernteren Querrandkante der Gehäuseöffnung (232) angeordnet ist, dass die der Andrückplatte (252) zugeordnete Andrückfeder (255) eine wellenförmig gebogene Blattfeder ist, die sich im wesentlichen in Richtung des Bewegungsweges des Lichtschutzschiebers (233) erstreckt, und dass das rechtwinklig zum Bewegungsweg des Lichtschutzschiebers (233) verlaufende Rückhalteorgan (257) in Richtung parallel zum Bewegungsweg des Lichtschutzschiebers verschiebbar geführt ist und mit einem Ende der wellenförmig gebogenen Blattfeder in Verbindung steht, derart dass beim Zurückdrängen der Andrückplatte (252) entgegen dem Einfluss der Andrückfeder (255) die letztere eine Streckung zufolge Abflachung der Wellen erfährt und hierdurch dem genannten Rückhalteorgan (257) eine Bewegung in seine unwirksame Lage erteilt.

11. Kassette nach Anspruch 9 oder 10, dadurch gekennzeichnet, dass das rechtwinklig zum Bewegungsweg des Lichtschutzschiebers (33; 233) verlaufende dritte Rückhalteorgan (57; 257) eine Anschlagfläche (101; 401) zum Zusammenarbeiten mit einer Randkante eines in das Gehäuse (31; 231) eingelegten lichtempfindlichen Blattes aufweist, um letzteres unter die näher beim Betätigungsende (34; 234) des Lichtschutzschiebers (33; 233) liegenden Querrandkante der Gehäuseöffnung (32; 232) zu verschieben, wenn das genannte Rückhalteorgan (57; 257) sich in seine wirksame Lage bewegt.

12. Kassette nach Anspruch 11, dadurch gekennzeichnet, dass bei der näher beim Betätigungsende (34; 234) des Lichtschutzschiebers (33) liegenden Querrandkante der Gehäuse-

0247405

Öffnung (32) mindestens eine der Stützfläche (53) der Andrückplatte (52) zugekehrte stationäre Anlagefläche (102)
und eine zu dieser hinführende schräge Führungsfläche (103)
für ein in das Gehäuse (31) eingelegtes und mittels des
genannten Rückhalteorgans (57) zu verschiebendes lichtempfindliches Blatt vorhanden sind.

13. Kassette nach einem der Ansprüche 1 bis 12, dadurch gekennzeichnet, dass der Lichtschutzschieber (333) an
seiner dem Innenraum des Gehäuses (331) zugekehrten Seite
mit wenigstens zwei Kufen (402) versehen ist, die parallel
zum Bewegungsweg des Lichtschutzschiebers (333) verlaufen
und an ihren vom Betätigungsende (234) des Lichtschutzschiebers (333) abgewandten Enden je eine schräg ansteigende Rampe
(404) aufweisen, derart dass durch Bewegen des Lichtschutzschiebers (333) in seine Schliesslage ein in das Gehäuse (331)
eingelegtes lichtempfindliches Blatt mittels der Rampen (404)
und Kufen (402) des Lichtschutzschiebers (333) in eine Position zwingbar ist, bei welcher nachher die Rückhalteorgane
(256, 257), wenn sie in ihre wirksamen Lagen gebracht werden,
über benachbarte Randpartien des lichtempfindlichen Blattes
zu greifen vermögen.

14. Kassette nach Anspruch 13, dadurch gekennzeichnet,
dass der Lichtschutzschieber (333) an seinem vom Betätigungsende (234) abgewandten Ende eine Endkante (406, 407) mit einem
von einer Geraden abweichenden Verlauf aufweist, derart dass
die entgegengesetzten äussersten Enden (408) der Endkante (406,
407) einen geringeren Abstand vom Betätigungsende (234) des
Lichtschutzschiebers (333) aufweisen als eine Mittelpartie
(406) der Endkante (406, 407).

15. Kassette nach Anspruch 11, dadurch gekennzeichnet,
dass im Gehäuse (31) ein unter dem Einfluss einer Rückführfeder (111) stehendes Fühlerorgan (110) angeordnet ist, das
durch das eingelegte und mittels des dritten Rückhalteorgans (57) zu verschiebende Blatt betätigbar ist und mit einem von aussen sichtbaren Anzeigeorgan (112) in Verbindung steht zum visuellen Anzeigen, ob die Kassette (30) mit einem lichtempfindlichen Blatt geladen ist oder nicht.

16. Kassette nach einem der Ansprüche 1 bis 15, dadurch gekennzeichnet, dass im Gehäuse (31) ein in Richtung quer zum Bewegungsweg des Lichtschutzschiebers (33) bewegbarer Riegel (130) gelagert ist, der unter dem Einfluss einer zugeordneten Feder (131) in eine wirksame Verriegelungslage bewegbar ist, bei welcher ein Teil (132) des Riegels (130) aus dem Gehäuse (31) vorsteht, um dadurch das Anbringen der Kassette (30) an einer Kamera oder einer Kassetten-Ladeeinrichtung zu verhindern, oder entgegen dem Einfluss der Feder (131) in eine unwirksame Entriegelungslage bewegbar ist, bei welcher er das Anbringen der Kassette (30) an einer Kamera oder einer Kassetten-Ladeeinrichtung nicht behindert, und dass der Riegel (130) in seiner unwirksamen Entriegelungslage mittels einer Klinke (127) sperrbar ist, die durch den Lichtschutzschieber (33) jeweils in eine den Riegel (130) freigebende Stellung gedrängt ist, wenn der Lichtschutzschieber (33) sich nicht in seiner Schliesslage befindet.

17. Kassette nach Anspruch 16, dadurch gekennzeichnet, dass der Riegel (130) eine Anschlagfläche (135) aufweist, die in der wirksamen Verriegelungslage des Riegels die Klinke (127) daran hindert, in ihre Sperrlage zurückzukehren, wenn der Lichtschutzschieber (33) in seine Schliesslage zurückbewegt ist, und dass die Klinke (127) mit einem von aussen sichtbaren Anzeigeorgan (121) verbunden ist zum visuellen Anzeigen, ob der Lichtschutzschieber (33) vorher geöffnet worden war, um ein in das Gehäuse (31) eingelegtes lichtempfindliches Blatt zu belichten.

18. Kassette nach einem der Ansprüche 1 bis 16, dadurch gekennzeichnet, dass der Lichtschutzschieber (33) an seinem Betätigungsende eine sich in Richtung der Breite des Lichtschutzschiebers (33) erstreckende Leiste (34) aufweist, entlang welcher mindestens eine Reihe von Emulsionsdatenfeldern (42) angeordnet ist, und dass mindestens eines der Emulsionsdatenfelder (42) markiert ist, um die betreffenden Emulsionsdaten zu bezeichnen.

19. Kassette nach Anspruch 18, dadurch gekennzeichnet, dass an der Leiste (34) ein entlang der Reihe der Emulsionsdatenfelder (42) verstellbarer Markierungsläufer (41) vorhanden ist, der auf ein beliebiges der Emulsionsdatenfelder (42) ausrichtbar ist, um die betreffenden Emulsionsdaten zu bezeichnen.

20. Kassette nach einem der Ansprüche 1 bis 19, dadurch gekennzeichnet, dass in Richtung des Bewegungsweges des Lichtschutzschiebers (33) betrachtet das Gehäuse (31) eine unsymmetrische Form aufweist, vorzugsweise durch eine Längsnut (133) an einer der schmalen Längsseiten des Gehäuses (31).

21. Einrichtung zum Laden oder Entladen der Kassette nach einem der Ansprüche 1 bis 20, dadurch gekennzeichnet, dass eine Haltevorrichtung (142; 182) zum Einsetzen der Kassette (30) mit mindestens einem stationären Tastorgan (85) versehen ist, das derart angeordnet und ausgebildet ist, dass es beim Einsetzen der Kassette (30) in die Haltevorrichtung (142; 182) automatisch mit dem Betätigungsorgan (81) der Kassette in Eingriff gelangt, um das Betätigungsorgan (81) in seine aktive Lage zu bewegen.

22. Einrichtung nach Anspruch 21 zum Laden der Kassette, dadurch gekennzeichnet, dass die Haltevorrichtung (142), in welche die Kassette (30) einsetzbar ist, eine Separiervorrichtung (150) mit einem lichtdicht verschliessbaren Stauraum (151) zur Aufnahme eines Stapels aus mehreren lichtempfindlichen Blättern gleicher Form und Grösse aufweist, welche Separiervorrichtung (150) eingerichtet ist zum Trennen jeweils eines einzelnen Blattes von dem im Stauraum (151) vorhandenen Stapel und zum Uebergeben des abgetrennten Blattes in eine Ausgabeöffnung (153), die in bezug auf Form und Grösse den Flächenabmessungen eines einzelnen lichtempfindlichen Blattes angepasst ist, dass der Ausgabeöffnung (153) ein Lichtschutzschieber (154) zugeordnet ist, der in eine die Ausgabeöffnung (153) lichtdicht verschliessende Schliesslage und in eine diese Oeffnung gänzlich freigebende Offenlage bewegbar ist, dass bei in die Haltevorrichtung (142) eingesetzter Kassette die Ausgabeöffnung (153) der Separiervorrichtung (150) mit der Gehäuseöffnung (32) der Kassette (30) übereinstimmend und gegen Umgebungslicht abgedichtet kommuniziert, wenn die der Ausgabeöffnung (153) der Separiervorrichtung (150) und der Gehäuseöffnung (32) der Kassette (30) zugeordneten Lichtschutzschieber (154, 33) in ihre Offenlagen bewegt sind, um den Uebertritt eines lichtempfindlichen Blattes von der Separiervorrichtung (150) in die Kassette (30) zu ermöglichen in einer Richtung senkrecht zu der Ebene des Blattes, und dass die Kassette (30) und die Haltevorrichtung (142) in Anpassung aneinander derart geformt sind, dass ein verkehrtes Einsetzen der Kassette (30) mit von der Separiervorrichtung (150) abgewandter Gehäuseöffnung (32) verhindert ist.

23. Einrichtung nach Anspruch 22, dadurch gekennzeichnet, dass die der Gehäuseöffnung (32) der Kassette (30) und der Ausgabeöffnung (153) der Separiervorrichtung (150) zugeordneten Lichtschutzschieber (33, 154) bei in die Haltevorrichtung (142) eingesetzter Kassette (30) parallel zueinander sind und gleichsinnig in ihre Offenlagen und Schliesslagen bewegbar sind, und dass die beiden Lichtschutzschieber (33, 154) Handgriffe (34, 168) aufweisen, die miteinander kuppelbar sind, derart dass jeweils beide Lichtschutzschieber (33, 154) zusammen zu bewegen sind.

24. Einrichtung nach Anspruch 21 zum Entladen der Kassette, dadurch gekennzeichnet, dass die Haltevorrichtung (182) einen Empfangsraum (183, 146) zur Aufnahme mindestens eines lichtempfindlichen Blattes und eine zu dem Empfangsraum führende Durchtrittsöffnung (186) aufweist, die in bezug auf Form und Grösse den Flächenabmessungen eines einzelnen lichtempfindlichen Blattes angepasst ist, dass der Durchtrittsöffnung (186) ein Lichtschutzschieber (187) zugeordnet ist, der in eine die Durchtrittsöffnung (186) lichtdicht verschliessende Schliesslage und in eine diese Oeffnung gänzlich freigebende Offenlage bewegbar ist, dass bei in die Haltevorrichtung (182) eingesetzter Kassette (30) die Gehäuseöffnung (32) derselben mit der Durchtrittsöffnung (186) der Haltevorrichtung (182) übereinstimmend und gegen Umgebungslicht abgedichtet kommuniziert, wenn die der Gehäuseöffnung (32) der Kassette (30) und der Durchtrittsöffnung (186) der Haltevorrichtung (182) zugeordneten Lichtschutzschieber (33, 187) in ihre Offenlagen bewegt sind, und dass die Kassette (30) und die Haltevorrichtung (182) in Anpassung aneinander derart geformt sind, dass ein verkehrtes Einsetzen der Kassette (30) mit von der Durchtrittsöffnung (186) der Haltevorrichtung (182) abgewandter Gehäuseöffnung (32) verhindert ist.

25. Einrichtung nach Anspruch 22, dadurch gekennzeichnet, dass die der Gehäuseöffnung (32) der Kassette (30) und der Durchtrittsöffnung (186) der Haltevorrichtung (182) zugeordneten Lichtschutzschieber (33, 187) bei in die Haltevorrichtung (182) eingesetzter Kassette (30) parallel zueinander sind und gleichsinnig in ihre Offenlagen und Schliesslagen bewegbar sind, und dass die beiden Lichtschutzschieber (33, 187) Handgriffe (34, 188) aufweisen, die miteinander kuppelbar sind, derart dass jeweils beide Lichtschutzschieber (33, 187) zusammen zu bewegen sind.

0247405

*Fig.1*

*Fig.2*

*Fig.3*

0247405

**Fig. 4**

170

34

33

126

48

**Fig. 5**

42  42  34

43  41  40  43

33

**Fig. 6**

42  34

41

42

**Fig. 7**

46  31

47

8  8

33

45  49

**Fig. 8**

33

49
45

48

31

**Fig. 9**

33  31

48

49

50  45

## Fig. 10A

## Fig. 10B

## Fig. 11

Fig. 12A

Fig. 13

Fig. 16

Fig. 14

Fig. 15

0247405

**Fig. 12B**

**Fig. 17**

**Fig. 18**

**Fig. 19**

Fig.20

Fig.21

Fig.22

Fig. 23

Fig. 24

Fig.25

Fig.26

0247405

Fig. 27

Fig.28

*Fig.29*

*Fig.30*

*Fig.31*

Fig.32A

Fig.32B

Fig.33

Fig.34

0247405

**_Fig.35_**

**_Fig.36_**

**_Fig.37_**

## Fig. 38A

## Fig. 38B

*Fig.39*

*Fig.40*

*Fig.41*

*Fig.42*

*Fig.43*

*Fig.44*

Europäisches Patentamt

# EUROPÄISCHER RECHERCHENBERICHT

EP 87 10 6632

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-B-1 242 086 (MEOPTA) <br> * Spalten 3-5; Figuren 1-5 * | 1 | G 03 B 17/32 |
| A | US-A-2 770 178 (N. KARPF) <br> * Spalten 2,3; Figuren 1-7 * | 1 | |
| A | GB-A-1 033 488 (MEOPTA) <br><br> * Seiten 2,3; Figuren 1-6 * | 1,15, 16 | |
| A | DE-C- 827 749 (F.V. HASSELBLAD) <br> * Seiten 2,3; Figuren 1-5 * | 1,15, 16 | |
| A | EP-A-0 181 554 (SINAR AG) <br><br> * Seiten 11-44; Figuren 1-4,10-20,41,42 * | 1,19, 21-25 | |

**RECHERCHIERTE SACHGEBIETE (Int. Cl.4)**

G 03 B 17/32
G 03 B 17/34

Der vorliegende Recherchenbericht wurde für alle Patentansprüche erstellt.

| Recherchenort | Abschlußdatum der Recherche | Prüfer |
|---|---|---|
| DEN HAAG | 31-08-1987 | BOEYKENS J.W. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82